Europäisches Patentamt

European Patent Office

Office européen des brevets

(11) Veröffentlichungsnummer: **0 096 194**
A2

## (12) EUROPÄISCHE PATENTANMELDUNG

(21) Anmeldenummer: 83103723.9

(22) Anmeldetag: 18.04.83

(51) Int. Cl.³: **G 05 F 1/455**
**B 23 K 11/24**

(30) Priorität: 10.06.82 CH 3613/82

(43) Veröffentlichungstag der Anmeldung:
21.12.83 Patentblatt 83/51

(84) Benannte Vertragsstaaten:
AT BE CH DE FR GB IT LI LU NL SE

(71) Anmelder: Opprecht, Paul
Herrenbergstrasse 10
CH-8962 Bergdietikon(CH)

(72) Erfinder: Opprecht, Paul
Herrenbergstrasse 10
CH-8962 Bergdietikon(CH)

(74) Vertreter: Steudtner, Werner, Dipl.-Ing.
Lindenhof 5
CH-8604 Hegnau(CH)

(54) Einrichtung zur stufenlosen Steuerung der Amplitude eines sinusförmigen elektrischen Wechselstromes.

(57) Einrichtung zur stufenlosen Steuerung der Amplitude eines in einem Stromkreis (15) fliessenden, im wesentlichen sinusförmigen elektrischen Wechselstromes (16) mit einem in dem Stromkreis (15) liegenden Stellglied (17) und Mitteln (8) zur Betätigung des Stellgliedes, die in elektrischer Hinsicht, insbesondere hinsichtlich geringer Wirkleistungsverluste, niedriger Klirrfaktoren und relativ grosser Stellbereiche, ähnlich günstige Eigenschaften wie die der bekannten Stelltransformatoren aufweist, im Gegensatz zu diesen jedoch eine nahezu verzögerungsfreie stufenlose elektronische Steuerung gestattet. Das Stellglied (17) umfasst eine Parallelschaltung eines ersten und eines zweiten Stromzweiges (1, 3) mit einem induktiven Widerstand (2) in dem ersten Stromzweig (1) und einem in einen Sperr- und einen Durchlasszustand versetzbaren steuerbaren Schaltorgan (4, 5) in dem zweiten Stromzweig (3), und die Mittel zur Betätigung des Stellgliedes (17) umfassen Steuermittel (8), um das Schaltorgan (4, 5) in jeder Halbwelle des Wechselstromes über einen veränderbaren und durch die Steuermittel (8) steuerbaren Teil der Halbwelle vom Sperrzustand in den Durchlasszustand zu versetzen.

FIG 1

Paul Opprecht                    Bergdietikon (Schweiz)

---

Einrichtung zur stufenlosen Steuerung der Amplitude eines

sinusförmigen elektrischen Wechselstromes

---

Die Erfindung bezieht sich auf eine Einrichtung zur stufenlosen Steuerung der Amplitude eines in einem Stromkreis fliessenden, im wesentlichen sinusförmigen elektrischen Wechselstromes mit einem in dem Stromkreis liegenden Stellglied und Mitteln zu Betätigung des Stellgliedes.

Einrichtungen dieser Art sind in den verschiedensten Ausbildungsformen bekannt.Beispielsweise kann schon ein einfa-

cher, in einem Wechselstromkreis angeordneter, stufenlos
veränderbarer Stellwiderstand eine solche Einrichtung
bilden, wobei in diesem Fall der Stellwiderstand das
Stellglied und der verstellbare Abgriff an dem Stellwistand das Mittel zur Betätigung des Stellgliedes bildet.
Andere Einrichtungen dieser Art sind aus der Transistortechnik bekannt, bei denen im Prinzip an Stelle des vorgenannten veränderbaren Stellwiderstandes ein Transistor
oder in symmetrisch aufgebauten Schaltungen ein Transistorpaar tritt, wobei dann der Transistor bzw. das Transistorpaar das Stellglied und die Vorrichtung zur Erzeugung der Steuerspannung an der bzw. den Basis-Emitter-
Strecken des bzw. der Transistoren die Mittel zur Betätigung des Stellgliedes bildet. Alle diese bekannten Einrichtungen der eingangs genannten Art mit konkreten oder
mit Hilfe von Transistoren elektronisch nachgebildeten
Stellwiderständen haben aber den Nachteil, dass am Stellglied Wirkleistungsverluste auftreten, deren Höhe im Verhältnis zu der Verbaucherleistung proportional dem Verhältnis des Widerstandswertes des konkreten oder elektronisch nachgebildeten Stellwiderstandes zum Verbaucherwiderstand ist und die daher sowohl aus energetischen Gründen wie auch wegen der Umwandlung dieser Wirkleistungsverluste in Stromwärme und der sich damit ergebenden,
meist unzulässig starken Erwärmung des Stellgliedes eine
Anwendung des Aufbauprinzips mit konkreten oder elektronisch nachgebildeten Stellwiderständen als Stellglied für
die Steuerung von höheren Strömen jedenfalls dann, wenn grössere Steuerbereiche erforderlich sind, von vornherein
ausschliessen.

Bei einer anderen Gruppe bekannter Einrichtungen der eingangs genannten Art wird zur stufenlosen Steuerung des
Stromes anstelle eines Spannungsabfalles an einem Wirkwiderstand im Prinzip eine der im Wechselstromkreis wirksamen Generatorspannung entgegenwirkende, stufenlos steuerbare Gegenspannung erzeugt. Zu dieser Gruppe gehören in
erster Linie die Stelltransformatoren und im weiteren
Sinne auch steuerbare Induktivitäten, also die von Magnetverstärkern her bekannten sogenannten Transduktoren.
In diesem Zusammenhang ist darauf hinzuweisen, dass Induktivitäten in der Wechselstromtechnik zwar allgemein
als passive Blindwiderstände behandelt werden, physikalisch gesehen jedoch keine Widerstände sondern vielmehr
Generatoren von durch die Stromänderung des hindurchfliessenden Stromes erzeugten Gegenspannungen sind. Bei
den als Spartransformatoren ausgebildeten Stelltransformatoren wird in dem zwischen Generator und Verbraucher
bzw. zwischen Generator und Abgriff liegenden Wicklungsteil im Prinzip eine zur Generatorspannung phasengleiche
Gegenspannung bzw. eine gegen die Generatorspannung um
180$^o$ phasenverschobene Spannung erzeugt, deren Höhe durch
Verstellung des Abgriffes stufenlos steuerbar ist. Bei
Stelltransformatoren mit getrennter Primär- und Stellwicklung sind die Verhältnisse weniger übersichtlich,aber
auch dort wird im Prinzip im Primärkreis eine zur Genera-

torspannung phasengleiche Gegenspannung erzeugt, deren Höhe durch Verstellung des Abgriffes an der Stellwicklung stufenlos steuerbar ist. Bei im Wechselstromkreis liegenden steuerbaren Induktivitäten wird durch den hindurchfliessenden Wechselstrom in der Induktivität eine zur Generatorspannung um $0^{o}$ bis $90^{o}$ phasenverschobene Gegenspannung erzeugt, die eine mit der Generatorspannung phasengleiche Gegenspannungskomponente hat, deren Höhe durch Verstellung der Induktivität stufenlos steuerbar ist. Neben Stelltransformatoren und steuerbaren Induktivitäten gibt es ferner auch bekannte Transistorschaltungen zur stufenlosen Wechselstromsteuerung, die im Prinzip in einem Wechselstromkreis eine der Generatorspannung entgegenwirkende, stufenlos steuerbare Gegenurspannung erzeugen. Alle diese bekannten Einrichtungen der eingangs genannten Art, bei denen zur Stromsteuerung eine der Generatorspannung entgegenwirkende, stufenlos steuerbare Gegenspannung erzeugt wird, haben gegenüber den obengenannten bekannten Einrichtungen der eingangs genannten Art, bei denen die Stromsteuerung mittel eines konkreten oder elektronisch nachgebildeten Stellwiderstandes erfolgt, generell den Vorteil, dass bei der Steuerung mittels Gegenspannungen im Gegensatz zur Steuerung mittels Stellwiderständen im Prinzip keine Wirkleistungsverluste auftreten und die Steuerung mittels Gegenspannungen daher auch bei sehr hohen Strömen anwendbar ist. Die nach dem Prinzip der Gegenspannungssteuerung arbeitenden bekannten Einrichtungen haben aber andere Nachteile, die ihre Ein-

satzmöglichkeiten im Bereich der stufenlosen Steuerung
von Wechselströmen wesentlich einschränken. So ist der
Stelltransformator zwar in elektrischer Hinsicht ein nahezu ideales Stellglied, hat aber in praktischer Hinsicht
den entscheidenden Nachteil, dass seine Verstellung nur
auf mechanischem oder elektromechanischem Wege erfolgen
kann und sich daher eine beträchtliche Zeitverzögerung
zwischen einer Aenderung der Steuergrösse und der entsprechenden Nachstellung des Stelltransformators bei einer Einrichtung der eingangs genannten Art mit einem
Stelltransformator als Stellglied ergibt. Ein weiterer
in manchen Einsatzfällen nicht unbedeutender prinzipieller Nachteil von Stelltransformatoren ist die Tatsache,
dass Stelltransformatoren genau genommen keine stufenlose
Steuerung sondern nur eine Steuerung in sehr kleinen, von
der Windungsspannung in der Stellwicklung bestimmten Stufen ermöglichen. Steuerbare Induktivitäten weisen, jedenfalls soweit es sich sogenannte Transduktoren bzw. um
gleichstromvormagnetisierbare Drosseln mit durch Aenderung der Gleichstromvormagnetisierung veränderbarem magnetischen Widerstand des Magnetflusskreises handelt, den
bei Stelltransformatoren gegebenen Nachteil der ausschliesslich mechanischen Verstellbarkeit und der damit
verbundenen beträchtlichen Zeitverzögerungen nicht auf,
jedoch reagieren auch sie auf Veränderungen der Steuergrösse, also des Vormagnetisierungsstromes bzw. der diesen antreibenden Spannung, verhältnismässig träge, was in
erster Linie auf die verhältnismässig grossen Windungs-

_ 6 _

zahlen und die daraus resultierenden relativ hohen Induktivitäten der Steuerwicklungen von Transduktoren zurückzuführen ist, die in Verbindung mit den relativ geringen ohmschen Widerständen im Steuerkreis zu relativ grossen Steuerzeitkonstanten führen. Ein entscheidender Nachteil von steuerbaren Induktivitäten bzw. von Transduktoren als Stellgliedern in Einrichtungen der eingangs genannten Art ist ferner der hohe Klirrfaktor, den Transduktoren aufgrund der einen ausgesprochenen Knick an der Sättigungsgrenze aufweisenden Magnetisierungskennlinien ihrer Eisenkerne wegen ihres infolge der Vormagnetisierung etwa in diesem Knickpunkt liegenden Arbeitspunktes in dem gesteuerten Wechselstrom verursachen. Die nach dem Prinzip der Gegenspannungssteuerung arbeitenden bekannten Transistorschaltungen schliesslich haben den Nachteil, dass sie wegen der beschränkten Spannungsbelastbarkeit von Hochstromtransistoren nur in Niederspannungsanlagen einsetzbar sind und auch in ihrer maximalen Steuerleistung auf relativ niedrige Werte beschränkt sind. Ausserdem sind die zum Betrieb dieser Transistorschaltungen erforderlichen Leistungen relativ zur maximalen Steuerleistung der Schaltung wesentlich grösser als bei steuerbaren Induktivitäten, so dass auch bei den nach dem Prinzip der Gegenspannungssteuerung arbeitenden Transistorschaltungen beträchtliche Erwärmungen auftreten können.

Zusammenfassend lässt sich sagen, dass es bisher trotz intensiver Bemühungen der auf dem Gebiet der Steuer- und

Regeltechnik tätigen Fachwelt noch nicht gelungen ist, eine Steuereinrichtung der eingangs genannten Art zu schaffen, die einerseits gleiche oder ähnlich günstige Eigenschaften hinsichtlich Wirkleistungsverlusten und Klirrfaktor sowie hinsichtlich eines relativ grossen Stellbereiches wie ein Stelltransformator hat und andererseits aber eine praktisch verzögerungsfreie stufenlose elektronische Steuerung gestattet.

Aus diesem Grunde wurde bisher bei Steuereinrichtungen zur stufenlosen elektronischen Steuerung von elektrischen Wechselströmen, jedenfalls soweit es sich dabei um starkstromtechnische Einrichtungen handelte, in der Regel auf eine Amplitudensteuerung verzichtet und stattdessen nur eine Steuerung des Effektivwertes des zu steuernden Wechselstromes vorgenommen, und zwar entweder mittels der sogenannten Phasenanschnittssteuerung, bei der der Strom mit Hilfe von Stromtoren jeweils nur über einen Teil der einzelnen Halbwellen der Generatorspannung eingeschaltet wird und dieser Teil und damit der Effektivwert des Wechselstromes durch stufenlose Verstellung der Phasenlage der den Stromtoren zugeführten Zündimpulse gegenüber der Phase der Generatorspannung stufenlos gesteuert wird, oder mittels der sogenannten Impulssteuerung, bei der in steuerbaren zeitlichen Abständen von der Dauer eines ganzzahligen Vielfachen N der Periodendauer des Wechselstromes Stromimpulse aufeinanderfolgen, die jeweils eine ebenfalls steuerbare Anzahl M von Vollwel-

- 8 -

len des Wechselstromes umfassen, wobei die Steuerung der
Impuls- und Pausendauer bzw. der Anzahlen M und N durch
Stromtore, denen jeweils zu Beginn jeder Halbwelle der M
Vollwellen eines Stromimpulses Zündimpulse und in den
Pausen zwischen den Stromimpulsen keine Zündimpulse zugeführt werden, und die Steuerung des zeitlichen Mittelwerters des Wechselstromes durch Veränderung des Verhältnisses von N zu M erfolgt.

Diese mit Phasenanschnittssteuerung oder Impulssteuerung
arbeitenden bekannten Steuereinrichtungen, mit denen nicht
die Amplitude eines sinusförmigen Wechselstromes sondern
nur die dem Verbraucher zufliessende Wechselleistung gesteuert wird und die daher auch nicht zu den Einrichtungen der eingangs genannten Art gehören, sind zwar wegen
des Fehlens einer geeigneten elektronisch steuerbaren
Einrichtung der eingangs genannten Art allgemein weit
verbreitet, sie haben aber den entscheidenden Nachteil,
dass sie zu ausserordentlich starken Oberwellen des gesteuerten Wechselstromes führen und damit nicht nur eine
echte Amplitudensteuerung verunmöglichen sondern auch
zu häufig sehr unerwünschten Nebenwirkungen wie Rückwirkungen der Oberwellen auf das Stromversorgungsnetz
und Fehlbelastungen des Verbrauchers bei oberwellenempfindlichen Verbrauchern führen.

Der Erfindung lag daher die Aufgabe zugrunde, eine Einrichtung der eingangs genannten Art zu schaffen, die bei

- 9 -

ähnlich günstigen Eigenschaften hinsichtlich geringer Wirkleistungsverluste, niedriger Klirrfaktoren und relativ grosser Stellbereiche wie denen der bekannten Stelltransformatoren eine nahezu verzögerungsfreie stufenlose elektronische Steuerung gestattet.

Erfindungsgemäss wird das bei einer Einrichtung der eingangs genannten Art dadurch erreicht, dass das Stellglied eine Parallelschaltung eines ersten und eines zweiten Stromzweiges mit einem induktiven Widerstand in dem ersten Stromzweig und einem in einen Sperr- und einen Durchlasszustand versetzbaren steuerbaren Schaltorgan in dem zweiten Stromzweig umfasst, wobei das Schaltorgan einen in dem zweiten Stromzweig liegenden Widerstand bildet, der im Sperrzustand des Schaltorganes ein Vielfaches des induktiven Widerstandes beträgt, und wobei der induktive Widerstand ein Vielfaches des von dem Schaltorgan im Durchlasszustand gebildeten Widerstandes beträgt, und dass die Mittel zur Betätigung des Stellgliedes Steuermittel umfassen, um das Schaltorgan in jeder Halbwelle des Wechselstromes über einen veränderbaren und durch die Steuermittel steuerbaren Teil der Halbwelle vom Sperrzustand in den Durchlasszustand zu versetzen.

Hauptvorteil der vorliegenden Einrichtung gegenüber allen bekannten Wechselstromsteuereinrichtungen ist, dass es damit erstmalig gelungen ist, eine Art elektronisch steuerbaren Stelltransformator zu schaffen, der praktisch verzögerungsfrei steuerbar ist und dessen technischer Gesamtaufwand noch unter dem eines entsprechenden handbetätigten Stelltransformators liegt. Weitere Vorteile der
vorliegenden Einrichtung sind, dass damit Wechselströme
bis zu mehreren Hundert Ampere stufenlos steuerbar sind,
und zwar über Steuerbereiche von bis zu 100% und mehr des
Wertes am unteren Bereichsende bei im gesamten Steuerbereich
unter 3% liegenden Klirrfaktoren und Wirkleistungsverlusten, die noch unter denen entsprechender handbetätigter
Stelltransformatoren liegen, sowie Ansprechzeiten der
Steuerung in der Grössenordnung von einer halben Schwingungsdauer des gesteuerten Wechselstromes.

Vorzugsweise ist bei der vorliegenden Einrichtung der induktive Widerstand von einer Drossel gebildet, wobei
zweckmässig in dem genannten ersten Stromzweig nur diese
Drossel liegt.

Bei einer bevorzugten Ausbildungsform der vorliegenden
Einrichtung umfasst das Stellglied ein in Reihe zu der
Parallelschaltung der beiden Stromzweige geschaltetes
Blindschaltglied, mit dessen Hilfe die Phasenlage des
gesteuerten Wechselstromes gegenüber der denselben antreibenden Generatorspannung so eingestellt werden kann,
dass sich bei der gegebenen Induktivität des genannten
induktiven Widerstandes ein maximaler Steuerbereich ergibt. Das Blindschaltglied besteht bei einem stark induktiven Verbraucher zweckmässig aus einem Kondensator, bei einem stark kapazitiven Verbraucher zweckmässig aus
einer Drossel und bei einem schwach induktiven oder reellen oder schwach kapazitiven Verbraucher zweckmässig aus
einer Reihenschaltung eines Kondensators und einer Drossel.

Im allgemeinen ist die vorliegende Einrichtung in einem
Stromkreis angeordnet, dessen Gesamtwiderstand bei Kurzschluss der in dem Stellglied enthaltenen Parallelschaltung der beiden Stromzweige ein komplexer Widerstand mit
Blind- und Wirkkomponente ist; die Blindkomponente des
komplexen Widerstandes sollte dabei zur Erzielung günstiger Steuerbereiche bei der Frequenz des Wechselstromes
zweckmässig induktiv sein, wobei das Grössenverhältnis
dieser Blindkomponente zur Wirkkomponente des komplexen
Widerstandes bei der Frequenz des Wechselstromes zweckmässig zwischen 0 und 2 und zur Erzielung möglichst
grosser Steuerbereiche vorzugsweise zwischen 0,4 und 1
liegen sollte. Zur Erzielung eines bei der gegebenen
Induktivität des genannten induktiven Widerstandes maximalen Steuerbereiches ist dieses Grössenverhältnis vorteilhaft so zu wählen, dass es wenigstens näherungsweise
den Wert $p = \sqrt{1 + q^2} - q$ hat, wobei $q = \frac{\omega L_V}{2R} + \frac{R_V}{\omega L_V} \cdot (1 + \frac{R}{2}$
ist und mit R die Wirkkomponente des komplexen Widerstandes sowie mit $\omega L_V$ die Blindkomponente und mit $R_V$ die
Wirkkomponente des in dem genannten ersten Stromzweig
liegenden induktiven Widerstandes bei der Frequenz des
Wechselstromes bezeichnet sind. Allgemein gilt, dass die

- 12 -

Blindkomponente des genannten komplexen Widerstandes
zweckmässig mindestens zum Teil von einer Induktivität
gebildet sein sollte, wobei der Blindwiderstand dieser
Induktivität bei der Frequenz des Wechselstromes zur
Erzielung niedriger Klirrfaktoren vorteilhaft grösser
als die Wirkkomponente des komplexen Widerstandes und
vorzugsweise mindestens dreimal so gross wie diese sein
sollte. Des weiteren ist zur Erzielung niedriger Klirrfaktoren von Bedeutung, dass die Blindkomponente des in
dem genannten ersten Stromzweig liegenden induktiven
Widerstandes bei der Frequenz des Wechselstromes zweckmässig kleiner als das Doppelte der Wirkkomponente des
komplexen Widerstandes und vorzugsweise höchstens gleich
dieser Wirkkomponente sein sollte. Das Grössenverhältnis
der Wirkkomponente des in dem genannten ersten Stromzweig
liegenden induktiven Widerstandes zur Blindkomponente
desselben bei der Frequenz des Wechselstromes sollte dabei zur Erzielung geringer Wirkleistungsverluste zweckmässig kleiner als 0,1 und vorzugsweise kleiner als 0,025
sein.

Für das genannte steuerbare Schaltorgan können bei der
vorliegenden Einrichtung vorteilhaft Stromtore verwendet
werden. Vorzugsweise ist das steuerbare Schaltorgan von
zwei in entgegengesetzter Durchlassrichtung parallelgeschalteten Thyristoren gebildet, wobei in dem genannten
zweiten Stromzweig zweckmässig nur die Parallelschaltung
der beiden Thyristoren liegen sollte. Die Thyristoren sollten dabei hinsichtlich ihrer Schaltgeschwindigkeit
zweckmässig so beschaffen sein, dass sie für eine Umschaltung vom Sperrzustand auf den Durchlasszustand eine
Schaltzeit von weniger als 2,5% der Schwingungsdauer des
Wechselstromes benötigen.

Die bei der vorliegenden Einrichtung zur Betätigung des
Stellgliedes vorgesehenen Steuermittel können vorteilhaft
einen Stelltrieb mit steuerbaren Umschaltmitteln zur Umschaltung des Schaltorgans von einem zum anderen seiner
beiden von Sperr- und Durchlasszustand gebildeten Schaltzustände sowie Synchronisiermittel zur Synchronisation
der Umschaltmittel auf die Phasenlage des Wechselstromes
umfassen. In dem obengenannten Fall, dass das steuerbare
Schaltorgan aus zwei antiparallelgeschalteten Thyristoren oder entsprechenden anderen Stromtoren besteht, können die Umschaltmittel vorteilhaft einen Impulsgenerator,
der einem der beiden Thyristoren jeweils während der Anstiegsflanke der positiven Halbwellen des Wechselstromes
und dem anderen Thyristor jeweils während der Anstiegsflanke der negativen Halbwellen des Wechselstromes einen
Zündimpuls zuführt, und die Synchronisationsmittel vorteilhaft ein Fühlorgan zum Abfühlen der Phasenlage des
Wechselstromes oder der diesen erzeugenden Generatorspannung sowie Mittel zur Steuerung des Impulsgenerators entsprechend dieser Phasenlage umfassen. Bei einer vorteilhaften Ausführungsform der vorliegenden Einrichtung umfassen die zur Betätigung des Stellgliedes vorgesehenen Steuermittel weiter ein auf den Stelltrieb wirkendes verstellbares Steuerglied zur Einstellung der Phasenlage der
Umschaltzeitpunkte in den einzelnen Halbwellen des Wechselstromes, das vorzugsweise von einer Parallelschaltung
eines Kondensators und eines Stellwiderstandes gebildet
ist.

Mit besonderem Vorteil kann die vorliegende Einrichtung
auch dahingehend weitergebildet sein, dass die Amplitude
des gesteuerten Wechselstromes selbsttätig auf einen vorgegebenen einstellbaren Wert eingeregelt wird. Zu diesem
Zweck können die zur Betätigung des Stellgliedes vorgesehenen Steuermittel zweckmässig eine Regeleinrichtung
zur selbsttätigen Einregelung der Amplitude des Wechselstromes auf den vorgegebenen einstellbaren Wert umfassen.
Die Regeleinrichtung kann dabei vorteilhaft einen eine
Messeinrichtung zur Messung der Amplitude des Wechselstromes umfassenden Istwert-Geber, einen auf einen vorgegebenen Sollwert einstellbaren Sollwert-Geber und einen
eingangsseitig mit der von der Differenz zwischen Istwert
und Sollwert gebildeten Regelabweichung beaufschlagten
und ausgangsseitig auf den Stelltrieb wirkenden Regelverstärker umfassen. Dabei kann zur Messung der Amplitude
des Wechselstromes und zu dem obenerwähnten Abfühlen der
Phasenlage desselben mit Vorteil ein und dasselbe Schaltelement verwendet werden, und zwar vorzusweise ein zweckmässig als Stromwandler ausgebildeter, primärseitig von
dem Wechselstrom durchflossener Messübertrager, an den sekundärseitig sowohl die genannte Messeinrichtung als auch das oben erwähnte Fühlorgan angeschlossen sind, wobei vorteilhaft eine Teil der Messeinrichtung bildende erste Sekundärwicklung und eine Teil des Fühlorgans bildende zweite Sekundärwicklung an dem Messübertrager vorgesehen sein können.

Besonders vorteilhaft ist der Einsatz der vorliegenden Einrichtung in einer mit einem Schweisstransformator versehenen elektrischen Widerstands-Schweissmaschine zur stufenlosen Steuerung der Amplitude eines im wesentlichen sinusförmigen Schweissstromes, weil es dabei um die Steuerung oder Regelung von Strömen in der Grössenordnung von mehreren hundert Ampere geht und entsprechende Steuer-. oder Regeleinrichtungen, mit denen derart hohe Ströme ohne Inkaufnahme hoher Klirrfaktoren praktisch verzögerungsfrei und nahezu verlustfrei stufenlos steuer- bzw. regelbar sind, bisher noch nicht bekannt waren. Bei einem solchen Einsatz der vorliegenden Einrichtung in einer mit einem Schweisstransformator versehenen elektrischen Widerstands-Schweissmaschine sollte das Stellglied zweckmässig im Primärstromkreis des Schweisstransformators liegen. Dabei kann die obengenannte, mindestens zum Teil die Blindkomponente des erwähnten komplexen Widerstands bildende Induktivität mit grossem Vorteil im wesentlichen von den Streuinduktivitäten des Schweisstransformators gebildet sein. Das Stellglied enthält dann vorteilhaft einen Kondensator, der den von diesen Streuinduktivitäten gebildeten Blindwiderstand bei der Frequenz des Wechselstromes annähernd, jedoch nicht ganz vollständig aufhebt.

Die Erfindung ist im folgenden anhand der nachstehenden
Figuren an einigen Ausführungsbeispielen näher erläutert.
Es zeigen

Fig. 1 ein Ausführungsbeispiel der vorliegenden Einrichtung im Primärstromkreis des Schweisstransformators einer elektrischen Widerstands-Schweissmaschine

Fig. 2 ein wechselstrommässiges Ersatzschaltbild der in

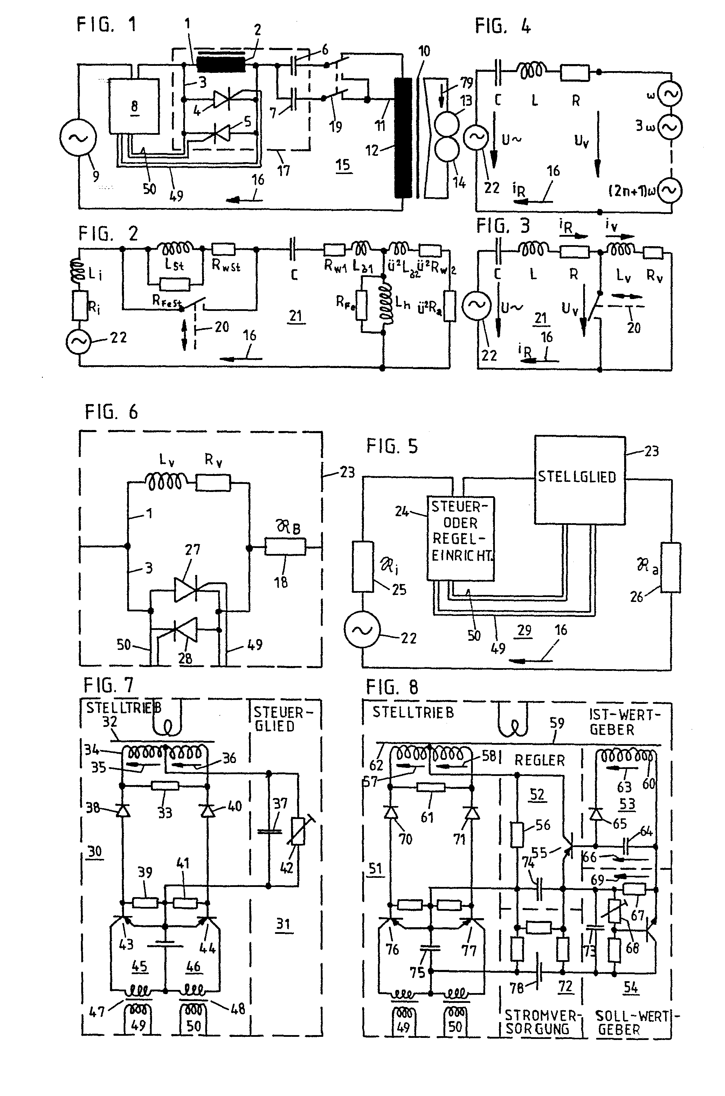

Fig. 1 gezeigten Anordnung

Fig. 3 ein reduziertes Ersatzschaltbild der in Fig.1 gezeigten Anordnung, bei dem im Vergleich zu dem in
Fig. 2 gezeigten Ersatzschaltbild die Blindkomponenten des primärseitigen Eingangswiderstandes
des Schweisstransformators und des Generatorinnenwiderstandes bei der Generatorfrequenz zu der
Induktivität L, die Wirkkomponenten des primärseitigen Eingangswiderstandes des Schweisstransformators und des Generatorinnenwiderstandes bei
der Generatorfrequenz zu dem Wirkwiderstand R,
die Blindkomponente des in Fig. 2 von $L_{st}$, $R_{Fe_{st}}$
und $R_{W_{st}}$ gebildeten Drosselwiderstandes zu $L_v$
und die Wirkkomponente dieses Drosselwiderstandes zu $R_v$ zusammengezogen sind und die in Fig. 1
angeordneten antiparallelgeschalteten Thyristoren ebenso wie in Fig. 2 durch einen gesteuerten
Schalter dargestellt sind

Fig. 4    ein lineares Ersatzschaltbild der in Fig. 3 gezeigten nichtlinearen Schaltungsanordnung, bei
dem die Wirkungen des von $L_V$, $R_V$ und dem gesteuerten Schalter gebildeten Teiles der Schaltungsanordnung durch die gleichen Wirkungen verursachende Generatoren der Grundwelle und der ungeradzahligen Oberwellen der Generatorspannung bzw.
des von dieser angetriebenen Wechselstromes ersetzt sind

Fig.    ein Blockschema einer Einrichtung nach der Erfindung in einem Stromkreis mit komplexem Genratorinnenwiderstand und komplexen Lastwiderstand

Fig. 6    ein Ausführungsbeispiel des Aufbaues des in
Fig. 5 als Block dargestellten Stellgliedes

Fig. 7    ein Ausführungsbeispiel des Aufbaues der in
Fig. 5 als Block dargestellten Steuereinrichtung
mit einem Stelltrieb zur Erzeugung der Zündimpulse für die in Fig. 6 gezeigten antiparallelgeschalteten Thyristoren und einem verstellbaren
passiven Steuerglied zur Einstellung der Amplitude des in dem Stromkreis in Fig. 5 fliessenden
sinusförmigen Wechselstromes

Fig. 8    ein Ausführungsbeispiel des Aufbaues der in Fig.5
als Block dargestellten Regeleinrichtung mit einem Stelltrieb zur Erzeugung der Zündimpulse für
die in Fig. 6 gezeigten antiparallelgeschalteten
Thyristoren, einem auf den Stelltrieb wirkenden
Regelverstärker, dem eingangsseitig die von der
Differenz zwischen Istwert und Sollwert gebildete
Regelabweichung zugeführt wird, einem über einen
Messübertrager mit dem Stromkreis in Fig. 5 gekoppelten Istwert-Geber und einem verstellbaren
Sollwert-Geber zur Einstellung des Sollwertes der
Amplitude des in dem Stromkreis in Fig. 5 fliessenden sinusförmigen Wechselstromes

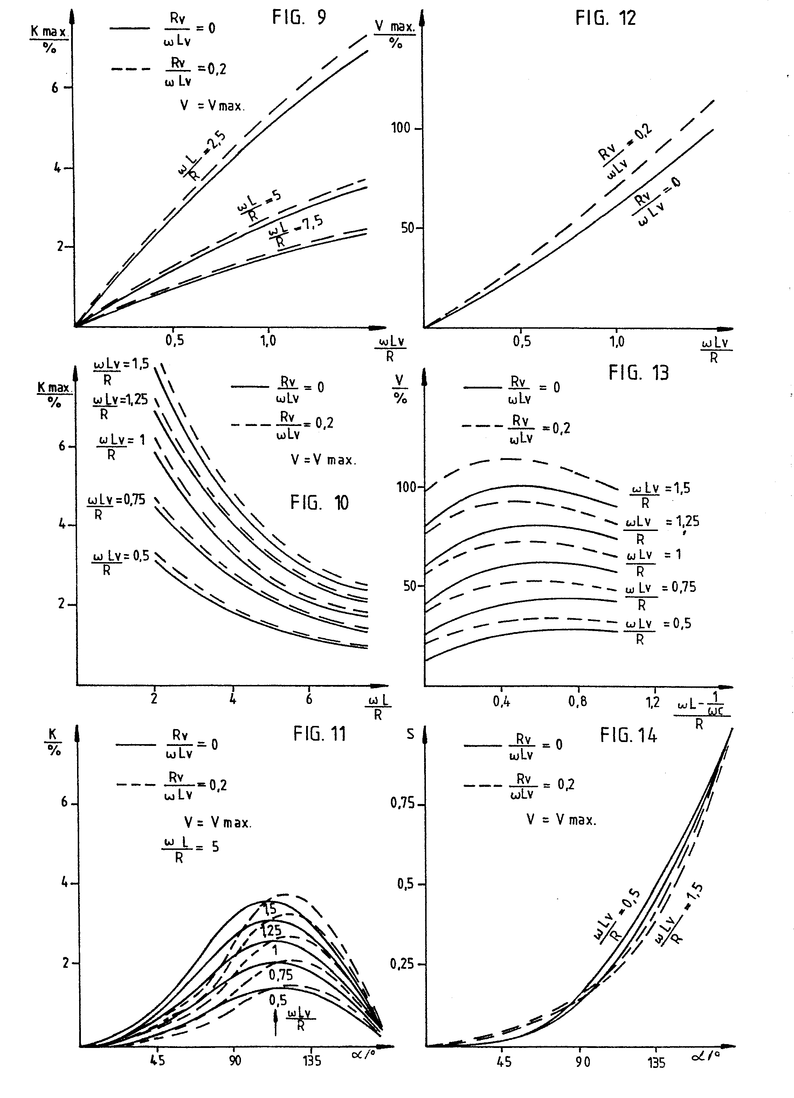

Fig. 9    ein Diagramm des maximalen Klirrfaktors $k_{max}$ innerhalb des Steuerbereiches als Funktion von
$\omega L_v/R$ mit $\omega L/R$ als Parameter für das in Fig.3
gezeigte Ersatzschaltbild

Fig.10    ein Diagramm des maximalen Klirrfaktors $k_{max}$ innerhalb des Steuerbereiches als Funktion von
$\omega L/R$ mit $\omega L_v/R$ als Parameter für das in Fig.3
gezeigte Ersatzschaltbild

Fig.11    ein Diagramm des Klirrfaktors $k$ als Funktion des
Schliesswinkels $\alpha$ des in dem Ersatzschaltbild in
Fig. 3 gezeigten gesteuerten Schalters mit $\omega L_v/R$
als Parameter

Fig.12  ein Diagramm des in Prozenten des Wertes an der
unteren Bereichsgrenze angegebenen maximalen
Steuerbereiches $V_{max}$ als Funktion von $\omega L_v/R$
für das in Fig. 3 gezeigte Ersatzschaltbild

Fig.13  ein Diagramm des in Prozenten des Wertes an der
unteren Bereichsgrenze angegebenen Steuerbereiches V als Funktion von $\frac{\omega L - 1/\omega C}{R}$ mit $\omega L_v/R$
als Parameter für das in Fig. 3 gezeigte Ersatzschaltbild

Fig.14  ein Diagramm der durch die Funktion $S = \frac{i - i_0}{i_m - i_0}$
für den in den Steuerbereichsgrenzen von $i_0$ bis
$i_m$ steuerbaren Wechselstrom i gegebenen Steuercharakteristik S über dem Schliesswinkel $\alpha$ des
in dem Ersatzschaltbild in Fig. 3 gezeigten gesteuerten Schalters mit $\omega L_v/R$ als Parameter.


Die prinzipielle Wirkungsweise der erfindungsgemässen
Einrichtung ist im folgenden an einem besonders vorteilhaften Anwendungsbeispiel erläutert, und zwar an der stufenlosen Steuerung der Amplitude eines im wesentlichen
sinusförmigen Schweisstromes in einer Widerstands-
Schweissmaschine. Dazu ist darauf hinzuweisen, dass sich
beim Quetschnahtschweissen mit hohen, z.B. über 50 m/min
liegenden Schweissgeschwindigkeiten aufgrund von umfangreichen und eingehenden Vergleichsversuchen die Anwendung
eines im wesentlichen sinusförmigen Schweisstromes von

entsprechend hoher, an die hohen Schweissgeschwindigkeiten angepasster Frequenz von z.B. 500 Hz zur Erzielung sauberer, spritzerfreier Quetschnähte von hoher Festigkeit und guter Verformbarkeit als optimal erwiesen hat und im Vergleich zur Anwendung nichtsinusförmiger Schweissströme, wie sie beispielsweise bei der zur Steuerung bzw. Regelung des Effektivwertes des Schweissstromes bisher üblichen Phasenanschnittssteuerung auftreten, zu wesentlich günstigeren Ergebnissen führt. Das Anwendungsbeispiel der stufenlosen Steuerung der Amplitude eines im wesentlichen sinusförmigen Schweissstromes in einer Widerstands-Schweissmaschine ist in diesem Zusammenhang insofern von besonderer Bedeutung, als die für die praktische Anwendung von sinusförmigen Schweissströmen erforderliche, nahezu verzögerungsfreie stufenlose Amplitudensteuerung des Schweissstromes und somit auch die mit sinusförmigem Schweissstrom erzielbaren optimalen Ergebnisse erst durch die erfindungsgemässe Einrichtung realisierbar wurden. Besonders vorteilhaft ist bei diesem Anwendungsbeispiel, dass der Schweissstromkreis bzw. der Sekundärstromkreis des Schweisstransformators einer Widerstands-Schweissmaschine in der Regel eine relativ hohe Streuinduktivität aufweist und daher die Blindkomponente des primärseitigen Eingangswiderstandes des Schweisstransformators bei den Frage kommenden Frequenzen von über 300 Hz in aller Regel ein Vielfaches der im wesentlichen vom Schweissstellenwiderstand und den Kupferwiderständen des Schweisstransformators gebildeten Wirkkomponente dieses primärseitigen Eingangswiderstandes beträgt, weil sich damit (wie das Diagramm des maximalen Klirrfaktors $k_{max}$ über $\omega L/R$ in Fig.10 zeigt) ein relativ geringer Klirrfaktor des gesteuerten Schweissstromes ergibt, der bei Fehlen der Streuinduktivitäten des Schweisstransformators nur durch den Einsatz einer anstelle derselben tretenden zusätzlichen Drossel erzielbar wäre. Aufgrund der Tatsache, dass sich relativ hohe Streuinduktivitäten des Schweisstransformators im vorliegenden Fall nicht wie sonst üblich nachteilig sondern im Gegenteil günstig auswirken, kann ferner der Schweisstransformator wesentlich kleiner als sonst üblich gemacht werden, so dass bei dem in Rede stehenden Anwendungsbeispiel nicht nur eine zusätzliche Drossel eingespart wird sondern sich zudem auch noch eine Verringerung des technischen Aufwandes für den Schweisstransformator ergibt.

Bei dem in Fig.1 gezeigten Blockschaltbild einer mit einer erfindungsgemässen Einrichtung versehenen Rollennaht-Widerstands-Schweissmaschine ist die erfindungsgemässe Einrichtung von der in dem erwähnten ersten Stromzweig 1 liegenden Drossel 2, den in dem erwähnten zweiten Stromzweig 3 liegenden antiparallelgeschalteten Thyristoren 4 und 5, den in Reihe zu der Parallelschaltung des ersten und zweiten Stromzweiges 1, 2 geschalteten Kondensatoren 6, 7 und der die Zündimpulse für die Thyristoren 4, 5 liefernden Steuer- oder Regeleinrichtung 8 und der herkömmliche Teil der Rollennaht-Widerstandsschweissmaschine

von dem Wechselspannungsgenerator 9 sowie dem Schweisstransformator 10 mit der mit einem Abgriff 11 versehenen
Primärwicklung 12 und dem sekundärseitigen, über die
Schweissrollen 13, 14 und das Schweissgut führenden
Schweissstromkreis gebildet. Die Drossel 2 bildet dabei
den erwähnten induktiven Widerstand in dem ersten Stromzweig 1, die antiparallelgeschalteten Thyristoren 4 und 5
das erwähnte, in einen Sperr- und einen Durchlasszustand
versetzbare steuerbare Schaltorgan in dem zweiten Stromkreis 3 und die Kondensatoren 6 und 7 das erwähnte, in
Reihe zu der Parallelschaltung der beiden Stromzweige 1
und 3 geschaltete Blindschaltglied. Zusammen bilden die
Drossel 2, die antiparallelgeschalteten Thyristoren 4 und
5 und die Kondensatoren 6 und 7 das zur Einstellung des
in dem Primärstromkreis 15 des Schweisstransformators 10
fliessenden, im wesentlichen sinusförmigen Wechselstromes
16 dienende Stellglied 17, das von der die Zündimpulse
für die Thyristoren 4 und 5 liefernden Steuer- oder Regel-
Einrichtung 8 betätigt wird. Das Stellglied 17 ist wie
ersichtlich entsprechend Fig.6 aufgebaut,wobei das Blindschaltglied 18 in Fig.6 je nach der Stellung des Steuerbereichsumschalters 19 entweder nur von dem Kondensator 6
oder von der Parallelschaltung der Kondensatoren 6 und 7
gebildet wird, und die Steuer- oder Regel-Einrichtung 8
kann beispielsweise entsprechend Fig. 7 bzw. 8 aufgebaut
sein.

Das wechselstrommässige Ersatzschaltbild der in Fig.1

_23_

gezeigten Anordnung ist in Fig.2 dargestellt. Die beiden antiparallelgeschalteten Thyristoren 4 und 5 sowie die die Zündimpulse für dieselben liefernde Steuer- oder Regel-Einrichtung 8 sind dabei durch den gesteuerten Schalter 20 ersetzt, der in jeder Halbwelle des in dem Stromkreis 21 fliessenden Wechselstromes 16 über einen veränderbaren, durch die Steuer- oder Regel-Einrichtung 8 gesteuerten Teil der Halbwelle, der im folgenden als Schliesswinkel $\alpha$ bezeichnet wird, geschlossen und danach wieder geöffnet wird. Dieser Ersatz der beiden antiparallelgeschalteten Thyristoren 4 und 5 durch den gesteuerten Schalter 20 ist keine vollständig exakte Nachbildung,weil erstens der Sperrwiderstand eines Thyristors nicht unendlich ist und zweitens ein Thyristor im Durchlasszustand wegen seiner nichtlinearen Strom-Spannungskennlinie durch den in seinem Arbeitspunkt wirksamen Arbeitswiderstand und eine sich aus dem Schnittpunkt einer durch seinen Arbeitspunkt laufenden Tangente an seiner Strom-Spannungs-Kennlinie mit der Spannungsachse ergebende Gegenspannung dargestellt werden müsste, jedoch sind diese Arbeitswiderstände und Gegenspannungen im Durchlasszustand der Thyristoren und auch die Leitwerte derselben in ihrem Sperrzustand relativ so gering, dass sie sowohl im vorliegenden Fall wie auch allgemein bei der Darstellung erfindungsgemässer Einrichtungen in Form ihrer wechselstrommässigen Ersatzschaltbilder mit guter Näherung vernachlässigt werden können, so dass die Darstellung der beiden antiparallelgeschalten Thyristoren 4 und 5 durch den nur auf Kurzschluss und Leerlauf schaltbaren gesteuten Schalter 20 die Genauigkeit des Ersatzschaltbildes in
Fig.2 praktisch nicht beeinträchtigt. Die Drossel 2 ist
in dem Ersatzschaltbild in Fig.2 in aus der Theorie der
Elektrotechnik bekannter Weise als Induktivität $L_{St}$ mit
parallelgeschaltetem, den Wirbelstrom- und Ummagnetisierungsverlusten im Eisenkern der Drossel 2 entsprechendem
Eisenverlustwiderstand $R_{FeSt}$ und in Reihe zu der Parallelschaltung von $L_{St}$ und $R_{FeSt}$ geschaltetem Wicklungswiderstand $R_{WSt}$ der Drossel 2 dargestellt, und den Schweisstransformator 10 mit sekundärseitigem Schweissstromkreis
ersetzt in dem Ersatzschaltbild in Fig.2 das ebenfalls
aus der Theorie der Elektrotechnik bekannte Transformatorersatzschaltbild mit sekundärseitigen Abschlusswiderstand $R_a$ , sekundärseitigem Wicklungswiderstand $R_{W2}$ , sekundärseitiger Streuinduktivität $L_{\delta 2}$ , primärseitiger
Streuinduktivität $L_{\delta 1}$ und primärseitigem Wicklungswiderstand $R_{W1}$ sowie der Hauptinduktivität $L_h$ und dem parallel zu dieser geschalteten, den Wirbelstrom- und Ummagnetisierungsverlusten im Eisenkern des Schweisstransformators 10 entsprechenden Eisenverlustwiderstand $R_{Fe}$ .
Auch diese aus der Theorie der Elektrotechnik bekannten
Ersatzschaltbilder von Drossel und Transformator stellen
wegen der durch die Eisenkerne verursachten Nichtlinearitäten keine vollständig exakten Nachbildungen der Drossel
2 und des Schweisstransformators 10 dar, jedoch wird auch
hier die Genauigkeit des gesamten Ersatzschaltbildes in
Fig.2 durch diese Nichtlinearitäten praktisch nicht be-

_25_

einträchtigt. Zu berücksichtigen ist in dem Ersatzschaltschaltbild in Fig.2 hingegen zur Erzielung einer guten
Genauigkeit desselben der Innenwiderstand des Wechselspannungsgenerators 9, der in der Regel aus einer Wirkkomponente und einer induktiven Blindkomponente zusammengesetzt ist und daher durch einen Wirkwiderstand $R_i$ und
eine in Reihe zu diesem geschaltete Induktivität $L_i$ darstellbar ist. Die Kapazität C im Ersatzschaltbild in Fig.
2 schliesslich stellt je nach der Stellung des Steuerbereichsumschalters 19 in Fig.1 entweder die Kapazität des
Kondensators 6 oder die Summe der Kapazitäten der Kondensatoren 6 und 7 dar. In diesem Zusammenhang ist darauf
hinzuweisen, dass sich mit der Stellung des Steuerbereichsumschalters 19 auch das Uebersetzungsverhältnis ü
des Schweisstransformators 10 und damit in dem Ersatzschaltbild in Fig.2 sowohl die auf die Primärseite des
des Transformators übersetzte sekundärseitige Streuinduktivität $ü^2 L_{\delta 2}$ als auch der auf die Primärseite des
Transformators übersetzte Wirkwiderstand $ü^2 (R_{w_2} + R_a)$ des
Schweissstromkreises ändern und daher eine entsprechende
Anpassung der Kapazität C (durch Zuschaltung des Kondensators 7 parallel zum Kondensator 6) zur Erzielung optimaler Betriebsbedingungen von Vorteil ist.

Das Ersatzschaltbild in Fig.2 lässt sich nun zu dem in
Fig.3 gezeigten Ersatzschaltbild reduzieren, indem die
Blindkomponenten des primärseitigen Eingangswiderstandes
des Schweisstransformators und des Generatorinnenwider-

-26-

standes bei der Generatorfrequenz zu der Induktivität L, die Wirkkomponenten des primärseitigen Eingangswiderstandes des Schweisstransformators und des Generatorinnenwiderstandes bei der Generatorfrequenz zu dem Wirkwiderstand R, die Blindkomponente des von $L_{St}$ , $R_{FeSt}$ und $R_{wSt}$ gebildeten Drosselwiderstandes zu $L_v$ und die Wirkkomponente dieses Drosselwiderstandes zu $R_v$ zusammengezogen werden. Dabei ergibt sich aus den im Ersatzschaltbild in Fig.2 gezeigten Schaltelementen

für die Induktivität $L_v$ und den Wirkwiderstand $R_v$ im Ersatzschaltbild in Fig.3

$$L_v = L_{St} \cdot \frac{1}{1 + (\omega L_{St}/R_{FeSt})^2}$$

$$R_v = R_{wSt} + \frac{R_{FeSt}}{1 + (R_{FeSt}/\omega L_{St})^2}$$

und für die Induktivität L und den Wirkwiderstand R im Ersatzschaltbild in Fig.3

$$L = L_i + L_{\delta 1} + \frac{1}{\omega G_L} \cdot \frac{1}{1 + (G_R/G_L)^2}$$

$$R = R_i + R_{w1} + \frac{1}{G_R} \cdot \frac{1}{1 + (G_L/G_R)^2}$$

mit

$$G_L = \frac{1}{ü^2 \omega L_{\delta 2}} \cdot \frac{1}{1 + (\frac{R_{w2} + R_a}{\omega L_{\delta 2}})^2} + \frac{1}{\omega L_h}$$

$$G_R = \frac{1}{ü^2 (R_{w2} + R_a)} \cdot \frac{1}{1 + (\frac{\omega L_{\delta 2}}{R_{w2} + R_a})^2} + \frac{1}{R_{Fe}}$$

wobei mit $\omega$ die Kreisfrequenz des Wechselspannungsgenera-

tors 9, mit ü das Uebersetzungsverhältnis des Schweisstransformators 10 bei der jeweiligen Einstellung des
Steuerbereichsumschalters 19 und mit den übrigen Bezeichungen die entsprechend bezeichneten Schaltelemente
in den Figuren 2 und 3 bezeichnet sind. Die Kapazität C
und der Schalter 20 in dem Ersatzschaltbild in Fig.3
entsprechen vollständig der oben schon erläuterten Kapazität C bzw. dem ebenfalls oben schon erläuterten
Schalter 20 in dem Ersatzschaltbild in Fig.2 . Gleich
sind ferner auch in beiden Ersatzschaltbildern in den
Figuren 2 und 3 der in dem Stromkreis 21 fliessende
Wechselstrom 16 und der eine Wechselspannung von der
Höhe der Leerlaufspannung des Wechselspannungsgenerators 9 von gleicher Frequenz wie derselbe liefernde
Wechselspannungsgenerator 22.

Wesentlich an dem Ersatzschaltbild in Fig.3 ist, dass
sich praktisch jede mit einer erfindungsgemässen Einrichtung versehene Anordnung auf dieses Ersatzschaltbild zurückführen lässt, weil infolgedessen die weitere
Ueberführung der in dem Ersatzschaltbild in Fig.3 dargestellten, wegen des gesteuerten Schalters 20 nichtlinearen Schaltungsanordnung in das entsprechende, in Fig.4
gezeigte lineare Ersatzschaltbild und die im folgenden
anhand dieses Ersatzschaltbildes in Fig.4 vorgenommenen
Ableitungen des Klirrfaktors k und des Steuerbereiches V
sowie der Steuercharakteristik S der in dem Ersatzschaltbild in Fig.3 dargestellten Anordnung ganz allgemein für

-28-

jede erfindungsgemässe Einrichtung gültig sind.

Allgemein lässt sich jede mit einer erfindungsgemässen
Einrichtung versehene Anordnung in Form des in Fig.5 gezeigten Ersatzschaltbildes darstellen, wobei das Stellglied 23 entsprechend der Fig.6 aufgebaut ist und die
Steuer- oder Regel-Einrichtung 24 beispielsweise entsprechend der Fig. 7 bzw. 8 ausgebildet sein kann. In Fig.5
stellt der Widerstand 25 den komplexen Innenwiderstand
$\Re_i = R_{i_w} + jR_{i_b}$ des Wechselspannungsgenerators 22 und
der Widerstand 26 den komplexen Lastwiderstand
$\Re_a = R_{a_w} + jR_{a_b}$ der in Fig.5 gezeigten Steuerschaltung
(der bei dem Ausführungsbeispiel in Fig.1 von dem primärseitigen Eingangswiderstand des Schweisstransformators 10 gebildet wird) und in Fig.6 der Widerstand 18
den im allgemeinsten Fall komplexen Widerstand
$\Re_B = R_{B_w} + jR_{B_b}$ des innerhalb des Stellgliedes 23 vorgesehenen Blindschaltgliedes dar. Für die Ueberführung
des allgemein für mit erfindungsgemässen Einrichtungen versehene Anordnungen gültigen Ersatzschaltbildes
in Fig.5 in das Ersatzschaltbild in Fig.3 gilt, dass
der Wirkwiderstand R in Fig.3 gleich   $R = R_{i_w} + R_{a_w} + R_{B_w}$
und der Blindwiderstand $\omega L - \dfrac{1}{\omega C}$ in Fig.3 gleich
$\omega L - \dfrac{1}{\omega C} = R_{i_b} + R_{a_b} + R_{B_b}$   ist, wobei sich L und C dann
aus dem induktiven Anteil bzw. aus dem kapazitiven Anteil
von $(R_{i_b} + R_{a_b} + R_{B_b})$ ergeben.

Das wegen des gesteuerten Schalters 20 noch nichtlineare

- 29 -

Ersatzschaltbild in Fig.3 kann dadurch in das lineare Ersatzschaltbild in Fig.4 überführt werden, dass die Wirkungen des von $L_v$, $R_v$ und dem gesteuerten Schalter 20 gebildeten Teiles der Schaltungsanordnung in Fig.3 durch gleiche Wirkungen ersetzt werden, die von anstelle dieses Teiles der Schaltungsanordnung in Fig.3 tretenden Generatoren der Grundwelle und der ungeradzahligen Oberwellen der Generatorspannung bzw. des von dieser angetriebenen Wechselstromes erzeugt werden. Die Wirkung des gesteuerten Schalters 20 in der Schaltungsanordnung in Fig.3 ist, dass jeweils bei geschlossenem Schalter 20, d.h. also in jeder Halbwelle des im Stromkreis 21 fliessenden Wechselstromes 16 jeweils über den Schliesswinkel α des Schalters 20, die Spannung über der Reihenschaltung von $L_v$ und $R_v$ gleich Null ist. Geht man zunächst von gegenüber $\omega L_v$ vernachlässigbar kleinem $R_v$ aus (was in der Praxis meistens gegeben ist), dann ist also bei geschlossenem Schalter 20 bzw. jeweils über dessen Schliesswinkel α in jeder Halbwelle des Wechselstromes 16 die Spannung $U_{L_v}$ über der Induktivität $L_v$ nahezu Null und demgemäss nach der allgemeinen Formel $U_L = L \frac{di_L}{dt}$ der durch die Induktivität $L_v$ fliessende Strom $i_v$ nahezu konstant. Dieser konstante Strom $i_v$ muss dem im Moment dess Schliessens des Schalters 20 durch die Induktivität $L_v$ fliessenden Strom entsprechen, weil nach dem Schliessen des Schalters 20 ja die Spannung an der Induktivität $L_v$ praktisch Null ist und damit der durch dieselbe fliessende Strom $i_v$ praktisch konstant bleibt. Da nun der durch die

- 30 -

Induktivität $L_V$ fliessende Strom $i_V$ bei geöffnetem Schalter 20 gleich dem über C, L und R fliessenden Strom $i_R$ sein muss und der Strom $i_R$ voraussetzungsgemäss im wesentlichen sinusförmig sein soll, ergibt sich für den zeitlichen Verlauf des Stromes $i_V$ in den einzelnen Halbwellen des im wesentlichen sinusförmigen Wechselstromes $i_R$ zunächst vom Nulldurchgang von $i_R$ bis zur Zündung des entsprechenden Thyristors und dem damit erfolgenden Schliessen des Schalters 20 ein dem sinusförmigen Verlauf von $i_R$ entsprechender Verlauf von $i_V$ und anschliessend ein nahezu konstanter Strom $i_V$, dessen Höhe dem Stromwert von $i_R$ im Moment des Schliessens des Schalters 20 entspricht und der solange andauert, bis der über den Schalter 20 fliessende Differenzstrom ($i_R - i_V$) Null wird bzw. der nach dem Schliessen des Schalters 20 weiter über $i_V$ hinaus ansteigende Wechselstrom $i_R$ nach Durchlaufen des Maximums der Halbwelle wieder bis auf den Stromwert von $i_V$ abgesunken ist und dementsprechend der durch den Schalter 20 bzw. durch den entsprechenden Thyristor fliessende Strom Null wird und infolgedessen der Thyristor löscht und der Schalter 20 sich damit öffnet, woraufhin dann der weitere Verlauf von $i_V$ bis zum Ende der Halbwelle wegen des geöffneten Schalters 20 wieder dem im wesentlichen sinusförmigen Verlauf von $i_R$ entspricht. Kurz gesagt entspricht also unter der obengenannten Voraussetzung eines gegen $\omega L_V$ vernachlässigbar kleinen $R_V$ der zeitliche Verlauf des durch die Induktivität $L_V$ fliessenden Stromes $i_V$ einer Sinuswelle mit achsparallel

- 31 -

abgeschnittenen Kuppen und einer dem Schliesswinkel α des

Schalters 20 entsprechenden Länge ihrer längs der Schnittlinien verlaufenden achsparallelen Abschnitte, die sich nach Fourier-Analyse in bekannter Weise durch die Funktion

$$f(t) = \sin \omega t - \sum_{n=0}^{\infty} \frac{(-1)^n}{\pi} \cdot \left( \frac{\sin n\alpha}{n} - \frac{\sin(n+1)\alpha}{n+1} \right) \cdot \frac{\sin(2n+1)\omega t}{2n+1}$$

darstellen lässt. Bei gegen $\omega L_V$ nicht mehr vernachlässigbar kleinem $R_V$ ergibt sich ein ähnlicher Verlauf des

durch die Induktivität $L_V$ fliessenden Stromes $i_V$, der

sich von dem obengenannten, für vernachlässigbar kleines

$R_V$ geltenden Verlauf nur dadurch unterscheidet, dass der

Strom $i_V$ während der Schliesszeiten des Schalters 20 nicht mehr ganz konstant bleibt sondern von seinem Anfangswert $i_{V_0}$ im Moment des Schliessens des Schalters 20 aus nach der Funktion $i_V = i_{V_0}(1 - e^{-t/\tau}) \approx i_{V_0}(1 - t/\tau)$

$= i_{V_0}(1 - \frac{t}{L_V/R_V}) = i_{V_0}(1 - \frac{R_V}{\omega L_V} \omega t)$ allmählich absinkt,

so wie dies allgemein für den Ausschwingvorgang des durch

eine Drossel fliessenden Stromes nach Kurzschluss der Drossel (der im vorliegenden Fall durch den Schalter 20 erfolgt) bekannt ist. In diesem Fall ergibt sich also für den Verlauf des durch die Induktivität $L_V$ fliessenden

stromes $i_V$ eine Sinuswelle mit leicht schräg abgeschnittenen Kuppen und einer dem Schliesswinkel α des Schalters

20 entsprechenden Länge ihrer längs der Schnittlinien verlaufenden, leicht schräg abfallenden Abschnitte, die

sich nach Fourier-Analyse durch die Funktion

$$F(t) = \sin \omega t - \sum_{n=0}^{\infty} \frac{(-1)^n}{\pi} \cdot \left( \frac{\sin n\alpha}{n} - \frac{\sin(n+1)\alpha}{n+1} \right) \cdot \frac{\sin(2n+1)\omega t}{2n+1}$$

$$+ \sum_{n=0}^{\infty} c_n \frac{(-1)^n}{\pi} \left[ \begin{array}{l} (\sin n\alpha + \sin(n+1)\alpha) \cdot \sin(2n+1)\omega t \\ +(\cos n\alpha + \cos(n+1)\alpha) \cdot \cos(2n+1)\omega t \end{array} \right]$$

$$= \sum_{n=0}^{\infty} (a_n \sin(2n+1)\omega t + b_n \cos(2n+1)\omega t)$$

mit

$$a_n = 0^n - \frac{(-1)^n}{\pi} \cdot \frac{1}{2n+1} \left[ \begin{array}{l} (\frac{\sin n\alpha}{n} - \frac{\sin(n+1)\alpha}{n+1}) \\ -c_n(\sin n\alpha + \sin(n+1)\alpha) \end{array} \right]$$

$$b_n = \frac{(-1)^n}{\pi} \cdot \frac{1}{2n+1} \cdot c_n(\cos n\alpha + \cos(n+1)\alpha)$$

$$c_n = \alpha \cdot \frac{R_V}{\omega L_V} \cdot \sqrt{1 - 2(\frac{\sin(2n+1)\alpha}{(2n+1)\alpha} - \frac{1 - \cos(2n+1)\alpha}{((2n+1)\alpha)^2})}$$

darstellen lässt. Mit dieser Funktion ergibt sich für den durch $L_V$ und $R_V$ fliessenden Strom $i_V = i_0 F(t)$ und damit für die an der Reihenschaltung von $L_V$ und $R_V$ abfallende Spannung $u_V = L_V \frac{d(i_0 F(t))}{dt} + R_V i_0 F(t)$ , wobei $i_0 = U/\sqrt{(\omega(L+L_V) - 1/\omega C)^2 + (R+R_V)^2}$ und U die Spannung des Wechselspannungsgenerators 22 ist. Die über der Reihenschaltung von $L_V$ und $R_V$ und damit über dem Schalter 20 in Fig.3 abfallende Spannung $u_V$ lässt sich somit in linearer Form folgendermassen darstellen

$$u_V = i_0 \cdot \sum_{n=0}^{\infty} \left[ \begin{array}{l} (a_n R_V - b_n(2n+1)\omega L_V) \cdot \sin(2n+1)\omega t \\ +(b_n R_V + a_n(2n+1)\omega L_V) \cdot \cos(2n+1)\omega t \end{array} \right]$$

$$= \sum_{n=0}^{\infty} U_n \sin((2n+1)\omega t + \varphi_n)$$

mit

$$U_n = U\sqrt{\frac{((2n+1)(\omega L_V)^2 + R_V^2}{(\omega(L+L_V) - 1/\omega C)^2 + (R+R_V)^2}} \cdot \sqrt{a_n^2 + b_n^2}$$

$$\varphi_n = arc\ tg\ \frac{a_n R_V - b_n(2n+1)\omega L_V}{b_n R_V + a_n(2n+1)\omega L_V}$$

Ersetzt man nun den von $L_V$, $R_V$ und dem gesteuerten Schalter 20 gebildeten Teil der Schaltungsanordnung in Fig.3 durch einen die Spannung $u_V$ erzeugenden Generator (bzw. eine Vielzahl von zusammen die Spannung $u_V$ erzeugenden Generatoren) so müssen die von diesem Generator von $u_V$ verursachten Wirkungen auf den restlichen, von C, L und R sowie dem Generator 22 gebildeten Teil der Schaltungsanordnung in Fig.3 die gleichen wie die von $L_V$, $R_V$ und dem gesteuerten Schalter 20 verursachten Wirkungen auf diesen restlichen Teil der Schaltungsanordnung in Fig.3 sein, und da die Spannung $u_V$ oben in einer nur Sinuswellen (Grundwelle und ungeradzahlige Oberwellen) enthaltenden und somit linearen Form dargestellt ist, lässt sich daher der von $L_V$, $R_V$ und dem gesteuerten Schalter 20 gebildete nichtlineare Teil der Schaltungsanordnung in Fig.3 in das lineare Ersatzschaltbild in Fig.4 überführen. Die einzelnen in Fig.4 dargestellten Generatoren der zusammen die Spannung $u_V$ bildenden Sinuswellen erzeugen dabei, wie aus der obigen linearen Darstellung von $u_V$ hervorgeht, Spannungen $u_{(2n+1)\omega} = U_n sin((2n+1)\omega t + \varphi_n)$ mit den oben angegebenen Amplituden $U_n$ und Phasenwinkeln $\varphi_n$, wobei die Oberwellengeneratoren, also die Generatoren der Spannungen $u_{(2n+1)\omega}$ mit $n > 0$, den Klirrfaktor des durch

– 34 –

C, L und R fliessenden Stromes und der Grundwellengenerator, also der Generator der Spannung $u_{(2n+1)\omega}$ mit n = 0, die Amplitudensteuerung bzw. die Höhe des durch C, L und R fliessenden Stromes bestimmen.

Die von dem Grundwellengenerator 27 in Fig.4 erzeugte, in ihrer Höhe vom Schliesswinkel $\alpha$ abhängige Spannung $u_\omega$

$$u_\omega = i_0((a_0 R_v - b_0 \omega L_v) \cdot \sin \omega t + (b_0 R_v + a_0 \omega L_v) \cdot \cos \omega t)$$

mit

$$a_0 = 1 - \frac{\alpha - (1+c_0)\sin\alpha}{\pi}$$

$$b_0 = \frac{c_0}{\pi} \cdot (1 + \cos\alpha)$$

$$c_0 = \frac{R_v}{\omega L_v} \sqrt{2(1 - \cos\alpha - \alpha \cdot \sin\alpha) + \alpha^2}$$

muss der von dem Wechselspannungsgenerator 22 gelieferten Spannung $u_\sim$

$$u_\sim = i_0((R+R_v)\sin \omega t + (\omega(L+L_v) - 1/\omega C)\cos \omega t)$$

als ursprünglich von dieser Spannung $u_\sim$ verursachte Wirkung entgegengerichtet sein, so dass der in dem Stromkreis in Fig.4 fliessende Strom mit der Kreisfrequenz $\omega$ von der Differenzspannung u

$$u = u_\sim - u_\omega = i_0\left[\begin{array}{l}(R + R_v(1-a_0) + b_0\omega L_v)\sin \omega t \\ +(\omega L - 1/\omega C + \omega L_v(1-a_0) - b_0 R_v)\cos\omega t\end{array}\right]$$

zwischen der Spannung $u_\sim$ des Wechselspannungsgenerators 22 und der Spannung $u_\omega$ des Grundwellengenerators 27 angetrieben wird und daher infolge der in dieser Differenzspannung u enthaltenen Spannung $u_\omega$ ebenso wie diese in seiner Höhe vom Schliesswinkel $\alpha$ abhängig ist. Dieser Strom i bzw. dessen Amplitude ergibt sich zu

$$i = \frac{\hat{u}}{\sqrt{R^2 + (\omega L - 1/\omega C)^2}}$$

$$i = i_0 \sqrt{\frac{(R + R_V(1-a_0) + b_0 \omega L_V)^2 + (\omega L - 1/\omega C + \omega L_V(1-a_0) + b_0 R_V)^2}{R^2 + (\omega L - 1/\omega C)^2}}$$

und hat - wie sich aus den obigen Formeln für i sowie für und $b_0$ ( $a_0=1$ und $b_0=0$ für $\alpha=0$ und $a_0 = b_0 = 0$ für $\alpha=\pi$ ) gibt - an der unteren Bereichsgrenze seines Steuerbereiches, also beim Schliesswinkel $\alpha=0$, den Wert $i = i_0$ und an der oberen Bereichsgrenze seines Steuerbereiches, also beim Schliesswinkel $\alpha=\pi$, den Wert $i = i_m$ mit

$$i_m = i_0 \cdot \sqrt{\frac{(\omega L - 1/\omega C + \omega L_V)^2 + (R + R_V)^2}{(\omega L - 1/\omega C)^2 + R^2}} \ .$$

In dem Diagramm in Fig. 14 ist die Steuercharakteristik $S = \dfrac{i - i_0}{i_m - i_0}$ dieses durch Veränderung des Schliesswinkels $\alpha$, über den der Schalter 20 in Fig.3 in jeder Halbwelle des Stromes i geschlossen wird, von $\alpha=0$ bis $\alpha=\pi$ bzw. $\alpha = 180^o$ in seiner Höhe steuerbaren Stromes i über dem Schliesswinkel $\alpha$ dargestellt, und zwar mit $\dfrac{\omega L_V}{R}$ als Parameter unter der Voraussetzung, dass $\dfrac{\omega L - 1/\omega C}{R}$ so gewählt ist, dass sich ein maximaler Steuerbereich des

_36_

Stromes i ergibt ( $V = V_{max}$ ; siehe hierzu die Abhängigkeit der Steuerbereichsgrösse V von $\frac{\omega L - 1/\omega C}{R}$ in Fig. 13). Dabei gelten im Normalfall, bei dem $R_V$ vernachlässigbar klein gegen $\omega L_V$ ist und daher mit guter Näherung $\frac{R_V}{\omega L_V} = 0$ gesetzt werden kann, die durchgezogenen Kurven, während die gestrichelten Kurven mit $\frac{R_V}{\omega L_V} = 0,2$ hauptsächlich zu dem Zweck mit in das Diagramm eingetragen worden sind, um für den Fall eines wesentlich von 0 abweichenden Wertes von $\frac{R_V}{\omega L_V}$ eine Entnahme der sich damit ergebenden Steuercharakteristik aus dem Diagramm in Fig. 14 durch Interpolation zu ermöglichen. In der Praxis sollte jedoch der Verlustwiderstand $R_V$ der Drossel 2 wenn irgend möglich wesentlich unter dem 0,2-fachen des induktiven Widerstandes $\omega L_V$ derselben gehalten werden, da sich bei einem Verhältnis $\frac{R_V}{\omega L_V} = 0,2$ bereits Wirkleistungsverluste an der Drossel 2 in der Grössenordnung von 10 bis 30% der dem Lastwiderstand R in Fig.3 zugeführten Nutzleistung ergeben. Entsprechendes gilt auch für die gestrichelten Kurvenscharen mit $\frac{R_V}{\omega L_V} = 0,2$ in den anderen, in Fig. 9 bis 13 gezeigten Diagrammen.

Die Grösse der Steuerbereiches, die in dem Diagramm in Fig.13 in Form der Funktion $V = \frac{i_m - i_o}{i_o} \cdot 100$ in Prozenten des Stromwertes $i_o$ an der unteren Bereichsgrenze des Steuerbereiches dargestellt ist, hängt wie in Fig.13 ersichtlich wesentlich von $\frac{\omega L - 1/\omega C}{R}$ , also von der Bemessung von L, C und R in Fig.3 bzw. von der Bemessung der Kondensatoren 6 und 7 sowie des Schweisstransforma-

-37-

tors 10 nebst sekundärseitigem Schweissstromkreis in Fig. 1, ab. Dabei liegen die im folgenden mit $V_{max}$ bezeichneten Maximalwerte von V in Abhängigkeit von $\frac{\omega L - 1/\omega C}{R}$ , wie die in Fig.13 für verschiedene Parameterwerte von $\frac{\omega L_V}{R}$ ebenfalls wiederum jeweils für $\frac{R_V}{\omega L_V}$ = 0 (durchgezogen) und $\frac{R_V}{\omega L_V}$ = 0,2 (gestrichelt) dargestellten Kurven von V zeigen, sämtlich im Bereich von $0 \leqq \frac{\omega L - 1/\omega C}{R} \leqq 1$, so dass also die Bemessung von L, C und R bzw. bei durch die Klirrfaktorforderungen vorgegebenem $\frac{\omega L}{R}$ die Bemessung von C zur Erzielung eines möglichst grossen Steuerbereiches des Stromes i zweckmässig so erfolgen sollte, dass $\frac{\omega L - 1/\omega C}{R}$ im Bereich zwischen 0 und 1 und wie aus Fig. 13 ersichtlich vorzugsweise zwischen 0,4 und 1 liegt. Soll genau der Maximalwert des Steuerbereiches $V_{max}$ erzielt werden, dann sind L, C und R in Fig.3 so zu bemessen, dass

$$\frac{\omega L - 1/\omega C}{R} = p = \sqrt{1 + q^2} - q \quad \text{mit} \quad q = \frac{\omega L_V}{2R} + \frac{R_V}{\omega L_V}(1 + \frac{R_V}{2R})$$

wird. Praktisch brauchen jedoch zur Erzielung des maximalen Steuerbereiches an die Genauigkeit dieser Bemessung keine allzugrossen Anforderungen gestellt werden, da die Maxima von V in Fig.13 relativ schwach ausgeprägt sind und man daher auch bei Abweichungen des Wertes von $\frac{\omega L - 1/\omega C}{R}$ um z.B. ±0,1 von p noch nahezu den maximalen Steuerbereich erzielt. Dieser Sachverhalt ist insbesondere dann von Bedeutung, wenn der Widerstand R in Fig.3 bzw. der sekundärseitige Lastwiderstand des Schweisstransformators 10 in Fig.1 veränderlich ist. In diesem Fall ist $\frac{\omega L - 1/\omega C}{R}$ zweckmässig so zu wählen, dass es bei maximalem R um einen bestimmten Differenzwert unter p und bei

_– 38 –_

minimalem R um einen bestimmten Differenzwert über p liegt, wobei die beiden Differenzwerte vorzugsweise etwa gleich sein sollten. Der Maximalwert $V_{max}$ des Steuerbereiches ist, wie das Diagramm in Fig.12 zeigt, in erster Linie nur von $\frac{\omega L_V}{R}$ sowie in geringem Masse von $\frac{R_V}{\omega L_V}$ abhängig und ergibt sich mit der obengenannten Grösse p zu $V_{max}= 100 \cdot (\sqrt{1 + \omega L_V/pR} - 1)$ . Das Diagramm in Fig.12 kann daher zur Bestimmung der für einen vorgegebenen Steuerbereich des Stromes i mindestens erforderlichen Induktivität $L_V$ der Drossel 2 in Fig.1 benutzt werden.

Der Klirrfaktor k des in dem Stromkreis in Fig.4 fliessenden, von den die Grundwelle liefernden Generatoren 22 und 27 sowie den Generatoren der ungeradzahligen Oberwellen angetriebenen, mit $i_R$ bezeichneten Wechselstromes 16 ist gemäss geltender Definition gleich dem Verhältnis des Effektivwertes des von sämtlichen Oberwellengeneratoren erzeugten Stromes $i_k = \sqrt{\sum_{n=1}^{\infty} i_n^2}$ zu dem Effektivwert des vorgenannten Wechselstromes $i_R$, der sich selbst wiederum aus dem in dem Stromkreis in Fig.4 fliessenden, oben angegebenen Strom i mit der Kreisfrequenz $\omega$ und dem vorgenannten Strom $i_k$ zu $i_R = \sqrt{i^2 + i_k^2}$ ergibt (die obengenannten Ströme $i_n$ sind dabei gleich $i_n = U_n/R_n$, wobei $R_n$ gleich $R_n = \sqrt{((2n+1)\omega L - 1/(2n+1)\omega C)^2 + R^2}$ und $U_n$ gleich der schon oben angegebenen Grösse ist). Der Klirrfaktor k ist also gleich $k = i_k/i_R = \sqrt{i_k^2}/\sqrt{i^2 + i_k^2} = 1/\sqrt{1 + i^2/\sum_{n=1}^{\infty} i_n^2} = 1/\sqrt{1 + i^2/\sum_{n=1}^{\infty} U_n^2/R_n^2}$ und ergibt sich somit aus den oben angegebenen Grössen i, $U_n$ und $R_n$ zu

$$k = \cfrac{1}{\sqrt{1 + \cfrac{(R + R_V(1-a_0) + b_0\omega L_V)^2 + (\omega L - 1/\omega C + \omega L_V(1-a_0) + b_0 R_V)^2}{((\omega L - 1/\omega C)^2 + R^2)\sum\limits_{n=1}^{\infty}(a_n{}^2 + b_n{}^2)\cfrac{((2n+1)\omega L_V)^2 + R_V{}^2}{((2n+1)\omega L - 1/(2n+1)\omega C)^2 + R^2}}}}$$

bzw. in normierter und prozentualer Darstellung zu

$$k/\% = \cfrac{100}{\sqrt{1 + \cfrac{(1 + rs(1-a_0) + sb_0)^2 + (v + s(1-a_0) - rsb_0)^2}{s^2(1+v^2)\sum\limits_{n=1}^{\infty}\cfrac{(a_n{}^2 + b_n{}^2)\cdot((2n+1)^2 + r^2)}{((2n+1)w + (v-w)/(2n+1))^2 + 1}}}}$$

mit $r = \dfrac{R_V}{\omega L_V}$ , $s = \dfrac{\omega L_V}{R}$ , $v = \dfrac{\omega L - 1/\omega C}{R}$ und $w = \dfrac{\omega L}{R}$

sowie den oben schon angegebenen Grössen $a_0$, $b_0$, $a_n$ und $b_n$.

Das Diagramm in Fig.11 zeigt die Abhängigkeit des Klirrfaktors k vom Schliesswinkel $\alpha$ des Schalters 20 in Fig.3 in Form von Kurvenscharen mit $\dfrac{\omega L_V}{R}$ als Parameter für $\dfrac{R_V}{\omega L_V} = 0$ (durchgezogene Kurven) und $\dfrac{R_V}{\omega L_V} = 0{,}2$ (gestrichelte Kurven), und zwar unter der Voraussetzung, dass $V = V_{max}$ bzw. $\dfrac{\omega L - 1/\omega C}{R}$ zur Erzielung des maximalen Steuerbereiches gleich der oben angegebenen Grösse p und ferner $\dfrac{\omega L}{R}$ zur Erzielung relativ geringer Klirrfaktoren gleich 5 ist. Wie in Fig.11 ersichtlich liegen die Maxima der einzelnen Kurven bzw. die sich in Abhängigkeit vom Schliesswinkel $\alpha$ ergebenden maximalen Klirrfaktoren $k_{max}$ in einem Bereich von Schliesswinkeln $\alpha$ von etwa $110^o$ bis $125^o$, während sich in

_40_

den übrigen Schliesswinkelbereichen geringere Klirrfaktoren ergeben. Man kann also mit guter Genauigkeit sagen, dass sich maximale Klirrfaktoren dann ergeben, wenn von dem Schalter 20 die Kuppen der Halbwellen etwa auf halber Höhe derselben (d.h. mit einem Schliesswinkel von ca. 120$^o$) abgeschnitten werden. In dem Diagramm in Fig.10 ist die Abhängigkeit dieser maximalen Klirrfaktoren $k_{max}$ von $\frac{\omega L}{R}$ in Form von Kurvenscharen mit $\frac{\omega L_V}{R}$ als Parameter für $\frac{R_V}{\omega L_V} = 0$ (durchgezogene Kurven) und $\frac{R_V}{\omega L_V} = 0,2$ (gestrichelte Kurven) dargestellt. Aus dem Diagramm in Fig.10 ist ersichtlich, dass der maximale Klirrfaktor $k_{max}$ mit steigendem $\frac{\omega L}{R}$ stark abfällt und man daher - jedenfalls bei grösseren erforderlichen Steuerbereichen des Stromes i und dementsprechend notwendigem grösseren $\frac{\omega L_V}{R}$ - zur Erzielung geringer Klirrfaktoren, wie schon oben angegeben, $\omega L$ vorzugsweise mindestens dreimal so gross wie R bzw. $\frac{\omega L}{R} \geqq 3$ wählen sollte. Die Abhängigkeit des maximalen Klirrfaktors $k_{max}$ von $\frac{\omega L_V}{R}$ zeigt das Diagramm in Fig. 9 in Form von Kurvenscharen mit $\frac{\omega L}{R}$ als Parameter für $\frac{R_V}{\omega L_V} = 0$ (durchgezogene Kurven) und $\frac{R_V}{\omega L_V} = 0,2$ (gestrichelte Kurven), und aus dieser Fig.9 in Verbindung mit der Fig.12 lassen sich daher die bei einem bestimmten erforderlichen Steuerbereich des Stromes i zu erwartenden Klirrfaktoren und bei bestimmten Anforderungen hinsichtlich des maximal zulässigen Klirrfaktors der mindestens erforderliche Wert von $\frac{\omega L}{R}$ entnehmen.

Generell ist zu den Diagrammen in den Figuren 9 bis 14 nochmals darauf hinzuweisen, dass diese Diagramme aufgrund des Sachverhaltes, dass sich praktisch jede mit einer erfindungsgemässen Einrichtung versehene Anordnung
auf das Ersatzschaltbild in Fig.3 zurückführen lässt,
allgemein für jede erfindungsgemässe Einrichtung gültig
sind.

Die die Zündimpulse für die Thyristoren 4 und 5 im Stellglied 17 in Fig.1 liefernde Einrichtung 8 bzw. die die
Zündimpulse für die Thyristoren 27 und 28 im Stellglied
23 in den Figuren 5 und 6 liefernde Einrichtung 24 kann,
wie oben schon erwähnt, entweder als Steuereinrichtung
beispielsweise wie in Fig.7 oder als Regeleinrichtung wie
z.B. in Fig.8 ausgebildet sein.

Bei der aus dem Stelltrieb 30 und dem Steuerglied 31 bestehenden Steuereinrichtung in Fig.7 wird im Prinzip mit
dem als Stromwandler ausgebildeten Messübertrager 32 die
Phasenlage des in dem Stromkreis 15 in Fig.1 bzw. in dem
Stromkreis 29 in Fig.5 fliessenden Stromes 16 ermittelt,
indem mittels dieses Messübertragers 32 an dem Widerstand
33 und damit auch an jeder der beiden Hälften der Sekundärwicklung 34 des Messübertragers 32 eine dem Strom 16 proportionale und mit dieser phasengleiche Spannung 35 bzw. 36
erzeugt wird.Durch die Spannung 35 wird der Kondensator 37
während jeder positiven Halbwelle des Stromes 16 über die
Diode 38 und den Widerstand 39 und durch die Spannung 36
während jeder negativen Halbwelle des Stromes 16 über die Diode 40 und den Widerstand 41 bis nahezu auf den Spitzenwert dieser Spannungen 35 bzw. 36 aufgeladen. Der Stellbereich des dem Kondensator 37 parallelgeschalteten
Stellwiderstandes 42 ist nun so bemessen, dass die Kondensatorspannung des Kondensators 37 nach Durchlaufen des
Maximums der Halbwelle langsamer als die Spannung 35 bzw.
36 absinkt, die zuvor die Ladung des Kondensators 37 bewirkt hat, so dass nach Durchlaufen des Maximums jeder
Halbwelle infolge der an dem Kondensator 37 stehenden Gegenspannung beide Dioden 38 und 40 gesperrt sind und der
Kondensator 37 sich nur über den Stellwiderstand 42 entlädt. Die Entladezeitkonstante wird nun mit dem Stellwiderstand 42 so eingestellt, dass die absinkende Spannung
des Kondensators gerade zu dem Zeitpunkt ebensogross wie
die ansteigende Spannung der nächsten Halbwelle wird, zu
dem an den zugeordneten Thyristor 4 oder 5 bzw. 27 oder
28 ein Zündimpuls abgegeben werden soll. In dem Moment,
wo die Spannung 35 bzw. 36 die Spannung des Kondensators
37 übersteigt, wird die Diode 38 bzw. 40 durchgeschaltet
und damit der Basis des Transistors 43 bzw. 44 ein Strom
zugeführt, der aufgrund der Stromverstärkung des Transistors einen rasch ansteigenden Strom im Kollektor-Emitter-Kreis 45 bzw. 46 desselben und damit einen Spannungsimpuls an dem in diesem Kollektor-Emitter-Kreis liegenden,
eine relativ hohe Induktivität aufweisenden Ausgangstransformator 47 bzw. 48 verursacht, der auf die Sekundärseite dieses Ausgangstransformators übertragen und über
die Leitung 49 bzw. 50 der Zündstrecke des Thyristors 4

-43-

bzw. 5 zugeführt wird und den Thyristor 4 bzw. 5 zündet.
Im Anschluss daran wird der Kondensator 37 über die
durchgeschaltete Diode 38 bzw. 40 bis nahezu auf den
Spitzenwert der Spannung 35 bzw. 36 aufgeladen, und dann
wiederholt sich der gleiche Vorgang, wobei die Dioden 38
und 40 abwechselnd durchgeschaltet werden und dementsprechend den Leitungen 49 und 50 abwechselnd Zündimpulse zugeführt werden.

Bei der den Stelltrieb 51, den Regler 52, den Istwertgeber 53 und den Sollwertgeber 54 umfassenden Regeleinrichtung in Fig.8 hat der Stelltrieb 51 praktisch den gleichen Aufbau und die gleiche Wirkungsweise wie der Stelltrieb 30 in Fig.7, jedoch wird hier nicht mit einer mit
veränderbarer Zeitkonstante zeitlich absinkenden Gegenspannung wie der Spannung des Kondensators 37 in Fig.7
sondern mit einer in ihrer Höhe veränderbaren, zeitlich
im wesentlichen konstanten Gegenspannung gearbeitet, die
der Kollektorstrom des Transistors 55 an dem Widerstand
56 erzeugt. Jeweils sobald die Spannung 57 bei ihrem Anstieg während der positiven Halbwellen bzw. die Spannung
58 bei ihrem Anstieg während der negativen Halbwellen
die an dem Widerstand 56 stehende Gegenspannung übersteigt, werden den Leitungen 49 und 50 in gleicher Weise
wie bei dem Stelltrieb 30 in Fig.7 abwechselnd Zündimpulse zugeführt. Die Höhe der an dem Widerstand 56 stehenden Gegenspannung stellt sich selbsttätig so ein, dass
ein bestimmter durch den Sollwertgeber 54 vorgegebener Wert des in dem Stromkreis 15 in Fig.1 bzw. 29 in Fig.5
fliessenden Stromes 16 aufrechterhalten wird. Hierzu ist
erstens der Messübertrager 59 mit einer zweiten Sekundärwicklung 60 versehen, an der ebenso wie an dem Widerstand
61 und damit an der Sekundärwicklung 62 des Messübertragers 59 eine dem Strom 16 proportionale Spannung 63 steht,
auf deren Spitzenwert der Kondensator 64 über die Diode
65 aufgeladen wird, und zweitens ist ein Sollwertgeber 54
vorgesehen, der an dem Widerstand 67 eine durch den
Stellwiderstand 68 einstellbare, der Spannung 66 am Kondensator 64 entgegengerichtete konstante Gleichspannung
69 erzeugt. Die Spannungsdifferenz zwischen der dem Strom
16 proportionalen Kondensatorspannung 66 und der konstanten Gleichspannung 69 treibt nun den Basisstrom des Transistors 55 an und verursacht daher einen um die Stromverstärkung des Transistors 55 höheren Kollektorstrom desselben und damit einen dieser Spannungsdifferenz mit der
Stromverstärkung des Transistors 55 als Proportionalitätsfaktor proportionalen Spannungsabfall an dem Widerstand 56. Da nun dem im Stromkreis 15 in Fig.1 bzw. 29 in
Fig.5 und damit durch die Primärseite des Messübertragers
59 fliessenden Strom 16 eine bestimmte an dem Widerstand
56 stehende Gegenspannung zugeordnet ist, muss die Spannungsdifferenz zwischen der dem Strom 16 proportionalen
Kondensatorspannung 66 und der konstanten Gleichspannung
69 bei sehr hoher Stromverstärkung des Transistors 55 im
eingeschwungenen Zustand der Regelschaltung in Fig.8
ausserordentlich klein sein, so dass die dem Strom 16 proportionale Kondensatorspannung 66 praktisch gleich
der konstanten Gleichspannung 69 sein muss und damit der
Strom 16 konstant bleiben muss. Würde sich nämlich der
im Stromkreis 15 bzw. 29 und damit durch die Primärseite
des Messübertragers 59 fliessende Strom 16 (z.B. infolge
Erhöhung der Generatorspannung des Generators 9 bzw. 22)
erhöhen, dann würde sich auch eine entsprechende Erhöhung
der Sekundärspannung 63 des Messübertragers 59 und damit
der Kondensatorspannung 66 ergeben, was zu einem Anstieg
der besagten Spannungsdifferenz zwischen der Kondensatorspannung 66 und der konstanten Gleichspannung 69 und damit zu einem Anstieg des Basisstromes und entsprechend
des Kollektorstromes des Transistors 55 und damit wiederum zu einer Erhöhung des Spannungsabfalles am Widerstand
56 führen würde. Infolge dieser Erhöhung der an dem Widerstand 56 stehenden Gegenspannung würde die Diode 70
bzw. 71 erst bei einer höheren Spannung 57 bzw. 58 durchgeschaltet und damit die Zündung des Thyristors 4 bzw. 5
oder 27 bzw. 28 über die Leitung 49 bzw. 50 innerhalb der
betreffenden Halbwelle verzögert, was zu einem geringeren
Schaltwinkel α des Schalters 20 in Fig.3 und damit gemäss
Fig.14 wieder zu einer Verringerung des im Stromkreis 15
bzw. 29 fliessenden Stromes 16 bis auf den Ausgangswert,
bei dem die Spannungsdifferenz zwischen der dem Strom 16
proportionalen Kondensatorspannung 66 und der konstanten
Gleichspannung 69 wieder nahezu Null ist, führen würde.
Die gewünschte Höhe des in dem Stromkreis 15 in Fig.1
bzw. 29 in Fig.5 fliessenden Stromes 16 ist bei der Re-

geleinrichtung in Fig.8 durch den Stellwiderstand 68 einstellbar, mit dem die Gleichspannung 69 und damit der
dieser proportionale Strom 16 eingestellt werden kann. Zu
beachten ist in diesem Zusammenhang hinsichtlich der
Stromversorgung des Sollwertgebers 54, dass die demselben
von der Stromversorgung 72 zugeführte, an dem Kondensator
73 stehende Betriebsspannung soweit als möglich stabil
gehalten werden sollte, da sich etwaige Aenderungen dieser Betriebsspannung als proportionale Aenderungen des
Stromes 16 auswirken würden. Hierzu sind erstens die Kapazitäten der Kondensatoren 73, 74 und 75 gross genug zu
wählen, dass sich keine Rückwirkungen der Kollektorströme
der Transistoren 55, 76 und 77 auf die Betriebsspannung
des Sollwertgebers 54 ergeben, und zweitens ist gegebenenfalls die Gleichspannungsquelle 78 z.B. durch eine
Zenerdiodenschaltung zu stabilisieren.

Bei einem praktischen Ausführungsbeispiel der in Fig.1
gezeigten, mit einer erfindungsgemässen Einrichtung versehenen Rollennaht-Widerstands-Schweissmaschine entspricht der primärseitige Eingangswiderstand des
Schweisstransformators 10 bei der in Fig.1 gezeigten
Stellung des Steuerbereichsumschalters 19 der Reihenschaltung einer Induktivität von 1,47 mH mit einem Wirkwiderstand von 0,9 Ohm bei einem Stromübersetzungsverhältnis des Schweisstransformators 10 von ü = 53 und bei
der anderen Stellung des Steuerbereichsumschalters 19
der Reihenschaltung einer Induktivität von 1,02 mH mit einem Wirkwiderstand von 0,67 Ohm bei einem Stromübersetzungsverhältnis des Schweisstransformators 10 von
ü = 43, der Generator 9 hat eine Frequenz von 500 Hz
und einen der Reihenschaltung einer Induktivität von
0,135 mH und eines Wirkwiderstandes von 0,05 Ohm entsprechenden Innenwiderstand und liefert eine Leerlaufspannung von 86,3 $V_{eff}$, die Drossel 2 lässt sich durch
die Reihenschaltung einer Induktivität von 0,454 mH
und eines Wirkwiderstandes von 0,015 Ohm darstellen
und die Kondensatoren 6 und 7 haben Kapazitäten von
68 Mikrofarad und 50 Mikrofarad sowie zulässige Betriebsspannungen von 400 $V_{eff}$ und 200 $V_{eff}$. Der
Schweisstrom 79 ist in der in Fig.1 gezeigten Stellung des Steuerbereichsumschalters 19 im Bereich von
2250 A bis 4500 A und in der anderen Stellung des Steuerbereichsumschalters 19 von 1500 A bis 3100 A steuerbar. Der Klirrfaktor des im wesentlichen sinusförmigen
Schweisstromes 79 ist in der in Fig.1 gezeigten Stellung des Steuerbereichsumschalters 19 maximal 3,3% und
in der anderen Stellung des Steuerbereichsumschalters
19 maximal 4,4%. Der Verlauf des Klirrfaktors über dem
Schliesswinkel α entspricht in der in Fig.1 gezeigten
Stellung des Steuerbereichsumschalters 19 etwa der in
Fig.11 gezeigten durchgezogenen Kurve mit $\frac{\omega L_v}{R}$ = 1,5 ,
und die Steuercharakteristik des Schweisstromes 79 über
dem Schliesswinkel α entspricht etwa der in Fig.14 gezeigten durchgezogenen Kurve mit $\frac{\omega L_v}{R}$ = 1,5 .

Patentansprüche

1. Einrichtung zur stufenlosen Steuerung der Amplitude eines in einem Stromkreis fliessenden, im wesentlichen sinusförmigen elektrischen Wechselstromes mit einem in dem Stromkreis liegenden Stellglied und Mitteln zur Betätigung des Stellgliedes, dadurch gekennzeichnet, dass das Stellglied (17,23) eine Parallelschaltung eines ersten und eines zweiten Stromzweiges ( 1 , 3 ) mit einem induktiven Widerstand ( 2 ) in dem ersten Stromzweig ( 1 ) und einem in einen Sperr- und einen Durchlasszustand versetzbaren steuerbaren Schaltorgan (4,5;27,28) in dem zweiten Stromzweig ( 3 ) umfasst, wobei das Schaltorgan einen in dem zweiten Stromzweig liegenden Widerstand bildet, der im Sperrzustand des Schaltorganes ein Vielfaches des induktiven Widerstandes ( 2 ) beträgt, und wobei der induktive Widerstand ( 2 ) ein Vielfaches des von dem Schaltorgan (4,5;27,28) im Durchlasszustand gebildeten Widerstandes beträgt, und dass die Mittel zur Betätigung des Stellgliedes Steuermittel ( 8 ;24) umfassen, um das Schaltorgan in jeder Halbwelle des Wechselstromes über einen veränderbaren und durch die Steuermittel steuerbaren Teil der Halbwelle vom Sperrzustand in den Durchlasszustand zu versetzen.

2. Einrichtung nach Anspruch 1, dadurch gekennzeichnet, dass der induktive Widerstand von einer Drossel ( 2 ) gebildet ist.

3. Einrichtung nach Anspruch 2, dadurch gekennzeichnet, dass in dem ersten Stromzweig ( 1 ) nur die Drossel ( 2 ) liegt.

4. Einrichtung nach einem der Ansprüche 1 bis 3, dadurch gekennzeichnet, dass das Stellglied (23) ein in Reihe zu der Parallelschaltung der beiden Stromzweige ( 1 , 3 ) geschaltetes Blindschaltglied (18) umfasst.

5. Einrichtung nach Anspruch 4, dadurch gekennzeichnet, dass das Blindschaltglied ein Kondensator (6,7) ist.

6. Einrichtung nach Anspruch 4, dadurch gekennzeichnet, dass das Blindschaltglied eine Drossel ist.

7. Einrichtung nach Anspruch 4, dadurch gekennzeichnet, dass das Blindschaltglied eine Reihenschaltung eines Kondensators und einer Drossel ist.

8. Einrichtung nach einem der Ansprüche 1 bis 7 in einem Stromkreis, dessen Gesamtwiderstand bei Kurzschluss der in dem Stellglied (23) enthaltenen Parallelschaltung der beiden Stromzweige ( 1 , 3 ) ein komplexer Widerstand mit Wirk- und Blindkomponente ist, dadurch gekennzeichnet, dass die Blindkomponente des komplexen Widerstandes bei der Frequenz des Wechselstromes induktiv ist und das Grössenverhältnis dieser Blindkomponente zur Wirkkomponente des komplexen Widerstandes bei der Frequenz des Wechselstromes zwischen 0 und 2, vorzugsweise zwischen 0,4 und 1 , liegt.

9. Einrichtung nach Anspruch 8, dadurch gekenzeichnet, dass das Grössenverhältnis wenigstens näherungsweise den Wert $p = \sqrt{1 + q^2} - q$ hat, wobei $q = \frac{\omega L_V}{2R} + \frac{R_V}{\omega L_V} \cdot (1 + \frac{R_V}{2R})$ ist und mit R die Wirkkomponente ( R ) des komplexen Widerstandes sowie mit $\omega L_V$ die Blindkomponente ($L_V$) und mit $R_V$ die Wirkkomponente ($R_V$) des in dem genannten ersten Stromzweig ( 1 ) liegenden induktiven Widerstandes ( 2 ) bei der Frequenz des Wechselstromes bezeichnet sind.

10. Einrichtung nach einem der Ansprüche 1 bis 9 in einem Stromkreis, dessen Gesamtwiderstand bei Kurzschluss der in dem Stellglied (23) enthaltenen Parallelschaltung der beiden Stromzweige ( 1 , 3 ) ein komplexer Widerstand mit Wirk- und Blindkomponente ist, dadurch gekennzeichnet, dass die Blindkomponente des komplexen Widerstandes mindestens zum Teil von einer Induktivität ( L ) gebildet ist und der Blindwiderstand dieser Induktivität bei der Frequenz des Wechselstromes grösser als die Wirkkomponente ( R ) des komplexen Widerstandes und vorzugsweise mindestens dreimal so gross wie diese ist.

11. Einrichtung nach einem der Ansprüche 1 bis 10 in einem Stromkreis, dessen Gesamtwiderstand bei Kurzschluss der in dem Stellglied (23) enthaltenen Parallelschaltung der beiden Stromzweige ( 1 , 3 ) ein komplexer Widerstand mit Wirk- und Blindkomponente ist, dadurch gekennzeichnet, dass die Blindkomponente ($L_V$) des in dem genannten ersten Stromzweig ( 1 ) liegenden induktiven Widerstandes ( 2 ) bei der Frequenz des Wechselstromes kleiner als das Doppelte der Wirkkomponente ( R ) des komplexen Widerstandes und vorzugsweise höchstens gleich dieser Wirkkomponente ist.

12. Einrichtung nach Anspruch 11, dadurch gekennzeichnet, dass das Grössenverhältnis der Wirkkomponente ($R_v$) des in dem genannten ersten Stromzweig ( 1 ) liegenden induktiven Widerstandes ( 2 ) zur Blindkomponente ($L_v$) desselben kleiner als 0,1 , vorzugsweise kleiner als 0,025 , ist.

13. Einrichtung nach einem der Ansprüche 1 bis 12,dadurch gekennzeichnet, dass das steuerbare Schaltorgan von zwei in entgegengesetzter Durchlassrichtung parallelgeschalteten Thyristoren (4,5;27,28) gebildet ist.

14. Einrichtung nach Anspruch 13, dadurch gekennzeichnet, dass in dem zweiten Stromzweig ( 3 ) nur die Parallelschaltung der beiden Thyristoren (4,5;27,28) liegt.

15. Einrichtung nach Anspruch 13 oder 14, dadurch gekennzeichnet, dass die Thyristoren (4,5;27,28) für eine Umschaltung vom Sperrzustand auf den Durchlasszustand eine Schaltzeit von weniger als 2,5% der Schwingungsdauer des Wechselstromes benötigen.

16. Einrichtung nach einem der Ansprüche 1 bis 15,dadurch gekennzeichnet, dass die zur Betätigung des Stellgliedes (17) vorgesehenen Steuermittel ( 8 ,24) einen Stelltrieb (30) mit steuerbaren Umschaltmitteln (43,44,47,48,49,50) zur Umschaltung des Schaltorgans (4,5) von einem zum anderen seiner beiden von Sperr- und Durchlasszustand gebildeten Schaltzustände und Synchronisiermitteln (32,37,38, 39,40) zur Synchronisation der Umschaltmittel auf die Phasenlage des Wechselstromes umfassen.

17. Einrichtung nach den Ansprüchen 13 und 16, dadurch gekennzeichnet, dass die Umschaltmittel einen Impulsgenerator (43,44,47,48,49,50), der einem der beiden Thyristoren ( 4 ) jeweils während der Anstiegsflanke der positiven Halbwellen des Wechselstromes und dem anderen Thyristor ( 5 ) jeweils während der Anstiegsflanke der negativen Halbwellen des Wechselstromes einen Zündimpuls zuführt, und die Synchronisationsmittel ein Fühlorgan (32,59) zum Abfühlen der Phasenlage des Wechselstromes oder der diesen erzeugenden Generatorspannu g und Mittel (38,40) zur Steuerung des Impulsgenerators entsprechend dieser Phasenlage umfassen.

18. Einrichtung nach Anspruch 16 oder 17, dadurch gekennzeichnet, dass die zur Betätigung des Stellgliedes (17) vorgesehenen Steuermittel ( 8 ) ein auf den Stelltrieb (30) wirkendes verstellbares Steuerglied (31) zur Einstellung der Phasenlage der Umschaltzeitpunkte in den einzelnen Halbwellen des Wechselstromes umfassen, das vorzugsweise von einer Parallelschaltung eines Kondensators (37) und eines Stellwiderstandes (42) gebildet ist.

19. Einrichtung nach einem der Ansprüche 1 bis 17, dadurch gekennzeichnet, dass die zur Betätigung des Stellgliedes (17) vorgesehenen Steuermittel ( 8 ) eine Regeleinrichtung (8,24) zur selbsttätigen Einregelung der Amplitude des Wechselstromes auf einen vorgegebenen einstellbaren Wert umfassen.

20. Einrichtung nach den Ansprüchen 16 und 19, dadurch gekennzeichnet, dass die Regeleinrichtung einen eine Messeinrichtung zur Messung der Amplitude des Wechselstromes umfassenden Istwert-Geber (53), einen auf einen vorgegebenen Sollwert einstellbaren Sollwert-Geber (54) und einen eingangsseitig mit der von der Differenz zwischen Istwert und Sollwert gebildeten Regelabweichung beaufschlagten und ausgangsseitig auf den Stelltrieb (51) wirkenden Regelverstärker (52) umfasst.

21. Einrichtung nach den Ansprüchen 17 und 20, gekennzeichnet durch einen primärseitig von dem Wechselstrom durchflossenen Messübertrager (59) mit einer Teil der Messeinrichtung bildenden ersten Sekundärwicklung (60) und einer Teil des Fühlorgans bildenden zweiten Sekundärwicklung (62).

22. Einrichtung nach einem der Ansprüche 1 bis 21 in einer mit einem Schweisstransformator versehenen elektrischen Widerstands-Schweissmaschine zur stufenlosen Steuerung der Amplitude eines im wesentlichen sinusförmigen Schweissstromes, dadurch gekennzeichnet, dass das Stellglied (17) im Primärstromkreis des Schweisstransformators (10) liegt.

23. Einrichtung nach den Ansprüchen 5, 10 und 22, dadurch gekennzeichnet, dass die genannte, mindestens zum Teil die Blindkomponente des komplexen Widerstandes bildende Induktivität ( L ) hauptsächlich von den Streuinduktivitäten ($L_{\delta 2}, L_{\delta 1}$) des Schweisstransformators (10) gebildet ist.

FIG. 1

FIG. 2

FIG. 3

FIG. 4

FIG. 5

FIG. 6

FIG. 7

FIG. 8

0096194

FIG. 9

FIG. 10

FIG. 11

FIG. 12

FIG. 13

FIG. 14